(19)

**Europäisches Patentamt**
**European Patent Office**
**Office européen des brevets**

(11) **EP 1 772 642 A1**

(12) **EUROPEAN PATENT APPLICATION**
published in accordance with Art. 158(3) EPC

(43) Date of publication:
**11.04.2007 Bulletin 2007/15**

(51) Int Cl.:
*F16D 13/52* *(2006.01)*    *F16D 13/70* *(2006.01)*

(21) Application number: **05743273.4**

(22) Date of filing: **26.05.2005**

(86) International application number:
**PCT/JP2005/009695**

(87) International publication number:
**WO 2005/116474 (08.12.2005 Gazette 2005/49)**

(84) Designated Contracting States:
**AT BE BG CH CY CZ DE DK EE ES FI FR GB GR
HU IE IS IT LI LT LU MC NL PL PT RO SE SI SK TR**

(30) Priority: **27.05.2004 WOPCT/JP2004/007658**

(71) Applicant: **Shigematsu Co.
Ehime 791-2113 (JP)**

(72) Inventor: **SHIGEMATSU, Takeshi
Iyo-gun, Ehime 7912113 (JP)**

(74) Representative: **Brown, Deborah Frances
Murgitroyd & Company
Scotland House
165-169 Scotland Street
GB-Glasgow G5 8PL (GB)**

(54) **CLUTCH MECHANISM AND RETAINER USED IN THE CLUTCH MECHANISM**

(57) A clutch mechanism that is capable of maintaining a force with which a clutch pressing mechanism presses friction plates to ensure pressure contact between the friction plates and clutch plates over a whole range of engine speed, and yet that enables many people to enjoy driving of a motor vehicle irrespective of their physical strengths. In the clutch mechanism, while reducing an elastic load pressing the friction plates against the clutch plates to reduce a force with which a driver grasps a clutch lever, increase in centrifugal forces exerted on mass bodies of centrifugal mechanisms is utilized to thereby compensate the reduction of the elastic load with the centrifugal forces, thereby ensuring tightness of (the) pressure contact which is capable of slide between the friction plates and the clutch plates.

Fig 1

EP 1 772 642 A1

**Description**

Technical Field

The present invention relates to a clutch mechanism which is used in a motor vehicle such as a two-wheeled motor vehicle, a four-wheeled motor vehicle or the like, and a retainer used in the clutch mechanism.

Background Art

A clutch mechanism plays roles to transfer a rotational driving force which is inputted from a rotational driving force input system (hereinafter referred to as "input system") to a rotational driving force output system (hereinafter referred to as "output system") and to discontinue the transfer. The clutch mechanism has friction plates which are connected to the input system and clutch plates which are connected to the output system and brought into pressure contact with the friction plates. Accordingly, engagement and disengagement between the input system and the output system are effected by bringing the friction plates and the clutch plates into pressure contact with each other and by releasing the friction plates and the clutch plates from the pressure contact, respectively.

The pressure contact between the friction plates and the clutch plates is effected by pressing the friction plates against the clutch plates, and the pressing of the friction plates is effected by means of a clutch pressing mechanism. The clutch pressing mechanism has a pressure plate which directly presses the friction plates, an elastic member which supplies the pressing force to the pressure plate, and a retainer which applies a load to a spring portion of the elastic member.

The spring load of the elastic member is determined as follows. First, from a maximum torque value of a motor vehicle such as a two-wheeled motor vehicle, a necessary clutch load which is required for preventing slide from occurring between the friction plates and the clutch plates is determined. Then, the spring load of the elastic member is so determined that the load with which the pressure plate presses the friction plates is greater than the necessary clutch load.

As described above, the spring load of the elastic member is determined on the basis of the maximum torque value and set to be constant irrespective of an engine speed. It is thereby possible to prevent slide between the friction plates and the clutch plates over a whole range of the engine speed.

On the other hand, however, since the spring load of the elastic member is determined on the basis of the maximum torque value, the spring load is inevitably large in a case of a motor vehicle with a high torque engine.

In particular, in a case of a two-wheeled motor vehicle, a pressure plate with which a clutch pressing mechanism is provided and which directly presses friction plates is operated by a clutch lever handled by a driver. In other words, by driver's grasping of the clutch lever, the pressure plate is moved against a spring load of an elastic member, and the friction plates are released from the pressing applied thereto by the pressure plate. The pressure contact between clutch plates and the friction plates is thereby removed to effect discontinuation of transfer of a rotational driving force inputted from an input system to an output system, i.e., so-called "disengagement of clutch". Thus, when "disengagement of clutch" is effected, the driver is required to grasp a clutch lever with a force capable of overcoming the spring load of the elastic member to operate the clutch lever.

Accordingly, in driving of a two-wheeled motor vehicle with a high torque engine, a driver is likely to be required to apply a large force to the clutch lever to effect manual operation thereof. This puts a heavy burden on the driver. Actually, in driving of a two-wheeled motor vehicle with a high torque engine for a long time, or in driving along a street with a high traffic density which requires repeated gear shiftings, driver's grasping power is likely to lower. To tackle such situations, enhancement of physical strengths such as grasping power and the like and high driving skill which enables smooth gear shifting are required. Under these circumstances, those who can enjoy driving of a two-wheeled motor vehicle have been a limited number of people. Further, in a case of women, they often have soft grips. Accordingly, due to difficulty in clutch lever operation itself, types of motor vehicles of which driving they can enjoy have tended to be restricted.

As a method for reducing a force required for operating a clutch lever, there has been a method in which amount of movement of a pressure plate is reduced as compared with that in a conventional clutch mechanism. By this method, however, it has not been easy to realize accuracy in removing a pressing force applied by the pressure plate to friction plates and ensuring a condition where pressure contact between the friction plates and the clutch plate is surely removed.

For example, as a conventional clutch mechanism, Patent Document 1 describes to the effect that by "a clutch for a motor vehicle or the like which has levers each pivotally attached to a lever shaft of ⋯ and each having a weight mounted on one end and an operative end that so functions as to press a pressure plate in the same direction as a pressing force of a spring due to a centrifugal force exerted on the weight by rotation of a driving shaft", there is provided "a clutch for a motor vehicle or the like which is capable of transmitting a strong driving force by applying a pressing force comprising the centrifugal forces as well as the pressing force of the spring to the pressure plate, and yet which requires only a light force for operation to discontinue transmission of a driving force."

However, the clutch for a motor vehicle or the like which is disclosed in Patent Document 1 only employs such a structure "that a large force is exerted on the weights 15 when number of revolutions of an engine 2 is high. When the number of revolutions of the engine 2 is low, the centrifugal forces exerted on the weights 15 are small, and thus the pressing force applied to the pressure plate 6 is comprised approximately only of the pressing force by the diaphragm spring 5".

In Patent Document 2, there is a description "The invention relates to a clutch device and, more specifically, to an automobile clutch utilizing centrifugal forces to increase and distribute pressure to the pressure plate with increasing engine speed". In other words, it discloses the invention relating to an automobile clutch which utilizes centrifugal forces to increase pressure with increasing engine speed and applies the increased pressure to the pressure plate.

However, the invention disclosed in Patent Document 2, which relates to an automobile clutch utilizing centrifugal forces, only employs such a structure that "The centrifugal weight is pivotally attached to the pressure plate between an outer periphery of the diaphragm spring and an inner periphery of the pressure plate. The centrifugal weight is movable between first and second positions by rotation of the clutch. The rotation of the clutch causes the centrifugal weight to bear against the diaphragm spring to provide an increased clamping force of the pressure plate. The clutch further comprises a means to limit the movement of the centrifugal weight. The means to limit the movement of the centrifugal weight further comprises a stop to limit the pivoting of the centrifugal weight. The stop prevents pivoting of the centrifugal weight to an upright position. The means to limit the movement of the centrifugal weight further comprises a guiding groove in the pressure plate."

Patent Document 3 discloses "a diaphragm spring type clutch device which comprises a diaphragm spring provided with centrifugal weights capable of providing, under influence of centrifugal forces (under centrifugal influence), the diaphragm spring with an auxiliary force supplementary to a pressing force which the diaphragm spring applies to pressing discs. It is described therein that according to the clutch device, there can be attained an object of "providing such a diaphragm spring type clutch device as to be capable of surely performing driving force (power) transmission without causing slide not only when a small driving force is transmitted but also when a large driving force is transmitted and as not to require an increased force for declutching operation".

In the diaphragm spring type clutch device disclosed in Patent Document 3, however, although only it is admitted that "such a structure as to comprise the diaphragm spring provided with the centrifugal weights capable of providing the diaphragm spring with the auxiliary force" is simply employed, "such a structure as not to require an increased force for declutching operation", in particular, "such a structure as not to require an increased force for declutching operation in a low engine speed range" is not clearly shown (is indefinite).

In Patent Document 4, with a view to "increasing tightness of clutch engagement only when an engine speed is high without increasing a weight of a friction clutch", there is disclosed "a friction clutch of diaphragm spring type which is characterized in that on a diaphragm spring, weights are so mounted as to be movable in spherical(ly) radial directions of the diaphragm spring by centrifugal forces due to rotation of the friction clutch, and spring forces in the retracting directions are applied to the weights".

However, the friction clutch of diaphragm spring type which is disclosed in Patent Document 4 only employs such a structure "that the weights are so mounted as to be movable in the spherical(ly) radial directions of the diaphragm spring, and the spring forces in the retracting directions are applied to the weights".

In Patent Document 5, with a view "to increasing a biasing force of a clutch spring as an engine speed increases to thereby ensure transmission of a high torque in a high engine speed range, and to reducing a clutch operating force in a low engine speed range", there is disclosed "a clutch so adapted that a biasing force of a clutch spring is changed by centrifugal weights which are moved when subjected to centrifugal forces due to rotation".

However, the clutch in Patent Document 5 only employs such a means that "⋯ When an engine speed is relatively low, the centrifugal forces exerted on the centrifugal weights are small ⋯, and thus, substantially only the biasing force of the clutch spring is exerted on pressure discs. Accordingly, the clutch operating force is small." It follows that there is employed only a means to simply render the clutch operating force relatively smaller at a low engine speed than at a high engine speed, and that there is not employed a means to positively reduce the clutch operating force at a low engine speed.

Therefore, the clutch in Patent Document 5 is not capable of eliminating involvement of a force in excess of that actually required for operating a clutch lever in a low engine speed range, and besides, of ensuring tightness of press contact between rotational driving force outputting members and rotational driving force receiving force irrespective of engine output (engine speed).

Patent Document 6 discloses an overloading prevention clutch "which is so adapted that control levers each having its one end provided with a weight located radially inner than a clutch spring is mounted pivotably in response to a centrifugal force on a driven side, and thus, (even) if a brake is applied suddenly, the resulting load is absorbed by a slip of the clutch to prevent a large (heavy) load from being applied to a transmission mechanism".

Further, in Patent Document 7, as a structure for reducing a clutch pedal treadling force in a clutch pressing assembly having a diaphragm spring as an elastic member, there is disclosed such a structure that when a clutch is engaged, a pressing force of a pressing member is multiplied by a lever mechanism and the greater pressing force is exerted on a pressure plate, and by adjusting a lever ratio of a lever member of the lever mechanism, a pressing force of a diaphragm spring is set to be at a low level to reduce a clutch pedal treadling force.

In this clutch pressing assembly, however, only the elastic member in the form of a diaphragm spring which provides a constant load is used. Accordingly, if the constant spring load is set to be small, the load with which the pressure plate presses friction plates is reduced over a whole range of engine speed. Thus, pressure contact between the friction plates and clutch plates is not necessarily ensured over a whole range of engine speed. For example, when the engine speed is high, the pressure contact is not ensured.

Therefore, none of the clutch mechanisms disclosed in the above Patent Documents 1 to 7 is capable of eliminating involvement of a force in excess of that actually required for operating a clutch lever in a low engine speed range, and besides, of ensuring tightness of press contact between rotational driving force outputting members and rotational driving force receiving force irrespective of engine output (engine speed).

Patent Document 1: a microfilm in which contents of the specification and drawings attached to the request (petition) of Japanese Unexamined Utility Model Publication No.Sho58-52341 (52341/1983) are recorded
Patent Document 2: the specification of U.S. Patent No.5575367
Patent Document 3: Japanese Patent Unexamined Publication No.Sho59-131033 (131033/1984)
Patent Document 4: Japanese Utility Model Publication No.Hei04-30428 (30428/1992) ?
Patent Document 5: Japanese Unexamined Patent Publication No.Sho55-44166 (44166/1980)
Patent Document 6: Japanese Utility Model Publication No.Hei02-32894 (32894/1990) ?
Patent Document 7: Japanese Unexamined Patent Publication No.Hei08-61389 (61389/1996)

Disclosure of Invention

Problem to be Solved by the Invention

As described above, it has not necessarily been easy to concurrently satisfy the demand to reduce a force required for operating a clutch lever and the demand to increase a force with which a clutch pressing mechanism presses friction plates, and further, to ensure pressure contact between the friction plates and clutch plates over a whole range of engine speed.

Under such circumstances, it is an object of the present invention to provide a clutch mechanism which is capable of maintaining a force with which a clutch pressing mechanism presses friction plates to ensure pressure contact between the friction plates and clutch plates over a whole range of engine speed, and yet which enables many people to enjoy driving of a motor vehicle irrespective of their physical strengths.

Means to Solve the Problem

The clutch mechanism according to the present invention comprises:

rotational driving force outputting members connected to a rotational driving force input system;
rotational driving force receiving members connected to a rotational driving force output system;
a pressing mechanism for pressing the rotational driving force outputting members against the rotational driving force receiving members to keep the rotational driving force outputting members and the rotational driving force receiving members in contact with each other; and
a disengaging means for releasing the rotational driving force outputting members and the rotational driving force receiving members from the pressing force which keeps them in contact with each other;
the pressing mechanism having a constant load applying means and a variable load applying means for together generating the pressing force which brings and keeps the rotational driving force outputting members and the rotational driving force receiving members in contact with each other, a value of the pressing load generated by the constant load applying means and the variable load applying means being kept in excess of a non-slide limit which is required for keeping the rotational driving force outputting members and the rotational driving force receiving members in contact with each other to transfer the rotational driving force, a value of a load generated by the constant load applying means being set to be less than the maximum non-slide limit, i.e., the maximum of the non-slide limit which is required for keeping the rotational driving force outputting members and the rotational driving force receiving members in contact with each other to transfer the rotational driving force.

Further, the clutch mechanism according to another form of the present invention comprises:

rotational driving force outputting members connected to a rotational driving force input system;

rotational driving force receiving members connected to a rotational driving force output system;

a pressing mechanism for pressing the rotational driving force outputting members against the rotational driving force receiving members to keep the rotational driving force outputting members and the rotational driving force receiving members in contact with each other; and

a disengaging means for releasing the rotational driving force outputting members and the rotational driving force receiving means from the pressing force which keeps them in contact with each other;

the pressing mechanism having an elastic load applying means and a centrifugal load applying means for together generating the pressing force which brings and keeps the rotational driving force outputting members and the rotational driving force receiving members in contact with each other, a value of the pressing load generated by the elastic load applying means and the centrifugal load applying means being kept in excess of a non-slide limit which is required for keeping the rotational driving force outputting members and the rotational driving force receiving members in contact with each other to transfer the rotational driving force, a value of a load generated by the elastic load applying means being set to be less than the maximum non·slide limit, i.e., the maximum of the non·slide limit which is required for keeping the rotational driving force outputting members and the rotational driving force inputting receiving members in contact with each other to transfer the rotational driving force.

In this connection, the non-slide limit is preferably a load set to be a lower limit of the pressing force between the rotational driving force outputting members and the rotational driving force receiving members which is required for allowing no slide to occur between the rotational driving force outputting members and the rotational driving force receiving members. Specifically, the non-slide limit is preferably a load which is calculated according to characteristics of an engine, a clutch mechanism and the like on the basis of an engine torque.

The maximum non-slide limit is preferably the non-slide limit at the maximum of the rotational driving force transferred from the rotational driving force input system to the rotational driving force output system.

According to the present invention, the value of the load generated by the constant load or elastic load-applying means is set to be smaller than the maximum non-slide limit, and by virtue thereof, reduction of a force required for a driver to operate a clutch lever (hereinafter referred to as "force required for operating a clutch lever") can be realized. Further, the value of the load generated by the constant load or elastic load-applying means and the variable load or centrifugal load-applying means is set to be in excess of the non-slide limit, and by virtue thereof, a pressure contact between the rotational driving force outputting members and the rotational driving force receiving members can be ensured irrespective of an engine output.

In the clutch mechanism according to the present invention, the pressing mechanism preferably has a first pressing member which is disposed facing the rotational driving force outputting members to be capable of being (brought and kept in contact therewith and a second pressing member connected to the rotational driving force receiving members, and the elastic load applying means is preferably disposed and compressed between the first pressing member and the second pressing member.

In the clutch mechanism according to the present invention, the centrifugal load applying means preferably comprises a plurality of supports annularly disposed on the second pressing member and centrifugal mechanisms respectively supported by the supports, and the centrifugal mechanisms preferably have swing members so supported respectively by the supports as to be swingable thereon, and each of the swing members preferably has an operative portion formed at its one end facing the first pressing member and a mass body provided on the other end.

By providing such a structure, centrifugal forces are exerted on the mass bodies by rotation of the second pressing member, and the swing members thereby swing on the supports. Consequently, the operative portions formed at the one ends of the swing members are urged to press the first pressing member. In this manner, the centrifugal load applying means provides the centrifugal load.

In the clutch mechanism according to the present invention, it is preferred that the first pressing member and the second pressing member coaxially disposed, and the elastic load applying means be a diaphragm spring, and the diaphragm spring have an annular portion and a plurality of levers which inward extend from the annular portion and of which tips are free ends, and the annular portion have its circumferential edge supported by a protrusion (an annular rim) formed on a circumferential edge of the first pressing member, and the plurality of levers be supported by said second pressing member, and an operative portion of a swing member of each of said centrifugal mechanisms so extends through a slot between adjacent levers as to be permitted to bias said first pressing member.(each of the operative portions of the swing members of said centrifugal mechanisms is permitted to bias said first pressing member with each of the swing members extending through a slit between adjacent levers.)(each of the swing members of said centrifugal mechanisms is permitted to extend through a slit between adjacent levers to bias said first pressing member at its operative portion.)

By providing such a structure, the diaphragm spring as the elastic load applying means is compressedly disposed between the first pressing means and the second pressing means. Further, a centrifugal load can be generated by the action of the centrifugal mechanisms mounted on the second pressing member.

In the clutch mechanism according to the present invention, it is preferred that a centrifugal load transfer member be disposed between the first pressing member and the diaphragm spring, and an operative portion of each of the centrifugal mechanisms of the second pressing member be permitted to bias the first pressing member via the centrifugal load transfer member.

Further, in the clutch mechanism according the present invention, the centrifugal load transfer member preferably has an annular portion and a plurality of plate portions outward extending from the circumferential edge of the annular portion, and the plate portions are preferably located at positions corresponding to the slits of the diaphragm spring, respectively.

By providing such a structure, the operative portions of the centrifugal mechanisms can bias the first pressing member via the plate portions. Accordingly, areas of portions which are pressed against the first pressing member are larger than those in the case where the first pressing member is directly biased by means only of the operative portions. This enables the centrifugal load applying means to more efficiently bias the first pressing member.

In the clutch mechanism according to the present invention, it is preferred that on a side of the second pressing member which faces the diaphragm spring, protuberances be formed in a ring, and the protuberances be pressed against (abut on) the levers in the vicinity of the free ends, and the diaphragm spring be thereby compressedly disposed.

By providing such a structure, the elastic load applying means is retained in a compressed condition by the protrusion formed on the circumferential edge of the first pressing member and the protuberances formed in the second pressing means. The diaphragm spring thereby biases the first pressing member toward the rotational driving force outputting members. In this manner, the diaphragm spring provides the constant load.

In the clutch mechanism according the present invention it is preferred that an inner diameter of the ring in which the protuberances are formed (hereinafter referred to as "retainer ring diameter") be so determined that the value of the load generated by the elastic load applying means is smaller than the maximum non-slip limit.

By providing such a structure, the retainer ring diameter is reduced, and reduction of the load generated by the elastic load applying means is thereby realized. In this manner, by the extremely simple structure, it is possible to obtain a clutch mechanism capable of realizing reduction of a force required for operating a clutch lever.

In other words, in the clutch mechanism of the present invention, it is preferred that the pressing force of the pressing mechanism which is exerted on the rotational driving force outputting members be so variable as to be at a required level only when required to be so. By virtue of this, a force required for operating a clutch lever can be greatly reduced as compared with a conventional two-wheeled motor vehicle in which a pressing force of a pressing mechanism that is exerted on rotational driving force outputting members is set to be constant based on a pressing force required at a time when the maximum torque is generated.

Further, the clutch mechanism according to still another form of the present invention is a clutch mechanism which transfers power (a driving force) from an engine to clutch plates by pressing friction plates (to keep the friction plates and the clutch plates in press contact with each other) and which discontinues the transfer of power (the driving force) from the engine by releasing the friction plates form the pressing, said clutch mechanism comprising:

> a pressure plate which presses the friction plates;
> a diaphragm spring which provides the pressure plate with the pressing force; and
> a retainer which applies a predetermined load to the diaphragm spring;
> the diaphragm spring being elastically supported between the pressure plate and the retainer and being elastically deformed by movement of the pressure plate,
> the retainer having an annular portion, protuberances formed in a ring on one surface of the annular portion, and a plurality of L-shaped arms which are swingably attached to supports provided on the annular portion and which extend through the annular portion,
> tightness of (the) press contact between the friction plates and the clutch plates being determined (established) by a diaphragm load resulting from superposition of the pressing force with which the protuberances press the diaphragm spring and the pressing force with which the diaphragm spring press the pressure plate, and a centrifugal load with which the L-shaped arms press the pressure plate and which increases as an engine speed increases.

The diaphragm spring preferably has an annular portion, a plurality of levers taperingly extending from an inner circumference of the annular portion toward the center of the annular portion, and a plurality of slits radially extending from an opening centrally formed. Each of the L-shaped arms on the supports preferably has an operative portion formed at its one end and a mass body provided on the other end. The diaphragm load is preferably generated in such a manner that the protuberances press the levers of the diaphragm spring and the levers in turn press the pressure plate. The centrifugal load is preferably generated in such a manner that the operative portions of the L-shaped arms are urged to pass through the slits to press the pressure plate by centrifugal forces exerted on the mass bodies as an engine speed increases.

In the clutch mechanism according to the present invention, it is preferred that the clutch mechanism further comprise a base plate having a ring portion and plate portions outward extending from a circumference of the ring portion. The base plate is preferably so disposed that the plate portions are located corresponding to the slits of the diaphragm spring, and the centrifugal load is preferably generated in such a manner that the operative portions of the L-shaped arms press the pressure plate via the plate portions.

The diaphragm load is preferably less than a maximum non-slide limit between the friction plates and the clutch plates which is calculated from a maximum torque.

An inner diameter of a ring in which the protuberances are formed, i.e., a retainer diameter is preferably so determined that the diaphragm load is less than a maximum non-slide limit between the friction plates and the clutch plates which is calculated from a maximum torque.

A total of the diaphragm load and the centrifugal load is preferably so variable depending on an engine speed as to be in excess of a non-slide limit at an engine speed at which a maximum torque is generated.

In the clutch mechanism according to the present invention, the annular portion of the retainer preferably comprises an annular portion main body made of a (highly) rigid lightweight material and a (highly) rigid higher specific gravity portion made of a (highly) rigid material having a specific gravity higher than that of the (highly) rigid lightweight material which are joined together, and protuberances are preferably formed in the (highly) rigid higher specific gravity portion.

In the clutch mechanism according to the present invention, the annular portion of the retainer preferably has its annular portion main body made of a (highly) rigid lightweight material implanted with rivets made of a (highly) rigid material having a specific gravity higher than that of the (highly) rigid lightweight material, and the retainer is preferably disposed in such a manner that end faces of the rivets abut on the levers of the diaphragm spring.

The retainer used in the clutch mechanism according another aspect of the present invention comprises an annular portion of the retainer comprising an annular portion main body made of a (highly) rigid lightweight material and a (highly) rigid higher specific gravity portion made of a (highly) rigid material having a specific gravity higher than that of the (highly) rigid lightweight material which are joined together, and protuberances are formed in the (highly) rigid higher specific gravity portion.

The retainer used in the clutch mechanism according another form of the present invention comprises an annular portion having its annular portion main body made of a (highly) rigid lightweight material implanted with rivets made of a (highly) rigid material having a specific gravity higher than that of the (highly) rigid lightweight material, and the retainer is disposed in such a manner that end faces of the rivets abut on the levers of the diaphragm spring.

Effect of the Invention

By employing the clutch mechanism according to the present invention in a two-wheeled motor vehicle, many people can enjoy driving of a two-wheeled motor vehicle irrespective of their physical strengths, while ensuring a sufficient pressing force of the clutch pressing mechanism on the friction plates.

Further, according to the retainer used in the clutch mechanism of the present invention, it is realized by the retainer provided with the rivets so disposed as to abut at end surfaces thereof on the levers of the diaphragm spring that in a low engine speed condition where the pressing force of the pressing mechanism which is exerted on the rotational driving force outputting members is not required to be so strong, the pressing force is moderated, and in a high engine speed condition where the pressing force is required to be stronger, the pressing force is reinforced as number of revolutions of the rotational driving force receiving members increases.

Best Mode for Carrying Out the Invention

In the following, the embodiments of the present invention will be described in detail with reference to the drawings.

(Embodiment 1)

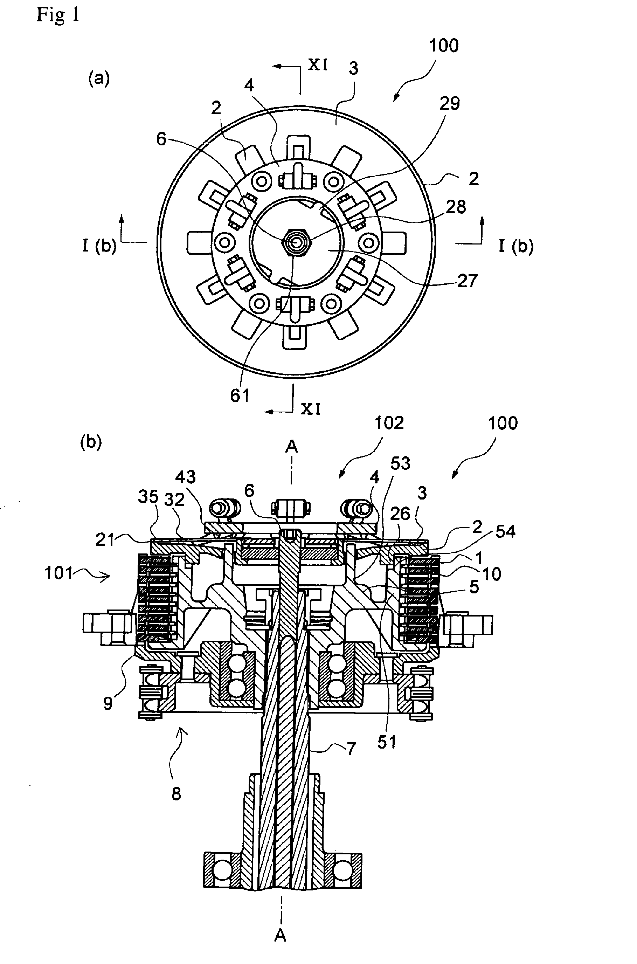

Fig.1(a) is a plan view of a clutch mechanism 100 as an embodiment 1 of the present invention, and Fig.1(b) is a sectional view taken along line I(b)-I(b) in Fig.1(a).

In Fig.1(b), line A-A is a rotational axis of the clutch mechanism 100. The clutch mechanism 100 is mounted on an end (a tip) of a transmission input shaft 7 and comprises an input section 8 to which a torque is transferred from an engine crankshaft (not shown), an inner hub 5 as a member of an output section which is fixedly mounted on the transmission input shaft 7, a clutch main body 101 disposed between the input section 8 and the inner hub 5, and a clutch pressing mechanism 102 for keeping the clutch main body 101 in pressure contact.

The clutch mechanism 100 plays a role to transfer a rotational driving force inputted via the input section 8 to which a torque is transmitted from the engine crankshaft as a constituent of a rotational driving force input system to the inner hub 5 which is a member of the output section and which is fixedly mounted on the transmission input shaft 7 as a constituent of a rotational driving force output system, and a role to discontinue the transfer. In this connection, in the present invention, the rotational driving force input system comprises an engine and a series of well-known mechanism parts which are operatively connected to the engine to transfer a rotational driving force of the engine to the clutch mechanism 100. The rotational driving force output system comprises a series of well-known mechanism parts which receive the driving force of the engine via the clutch mechanism 100 and output the driving force to power a driving wheel or driving wheels.

The clutch main body 101 is placed in an annular space between a cylindrical portion 91 of a clutch outer case 9 and a cylindrical portion 51 of the inner hub 5, as shown in Figs.1(b), 2 and 3. The clutch main body 101 comprises a plurality of friction plates 1 and, likewise, a plurality of clutch plates 10.

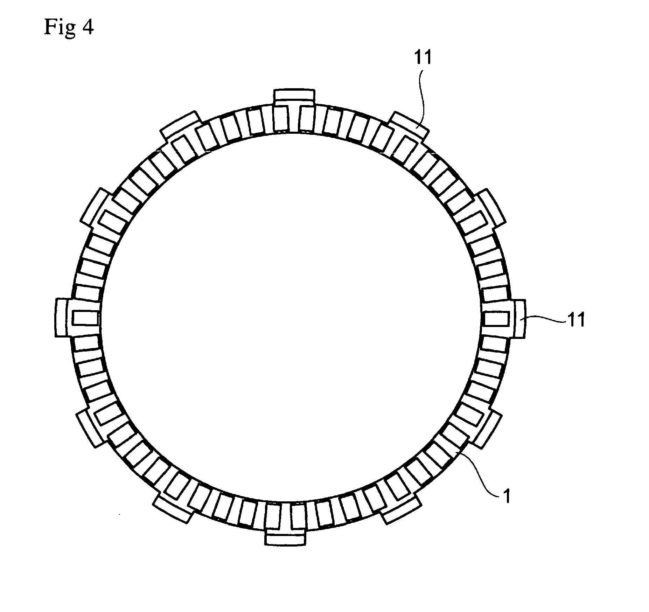

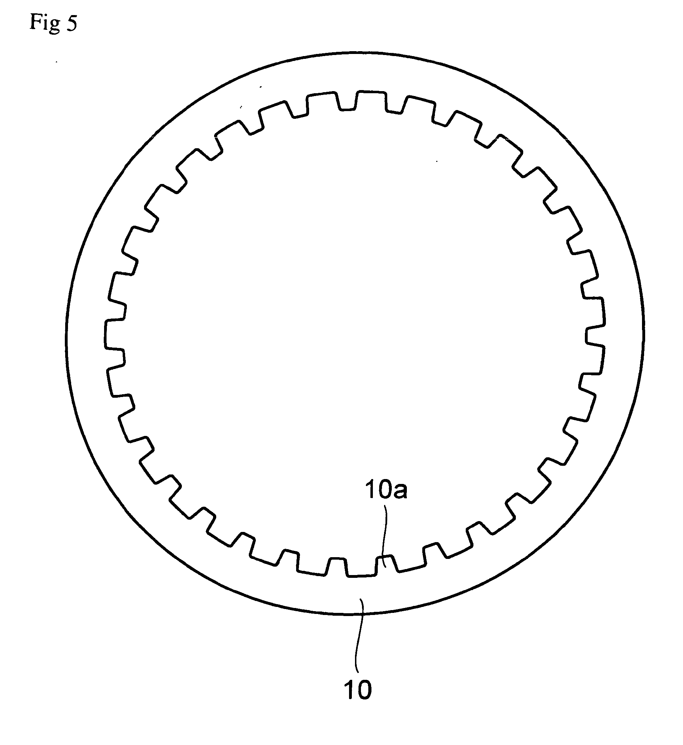

As shown in Fig.4, each of the friction plates 1 has its outer circumference formed with spline teeth 11, and the spline teeth 11 are meshed with spline grooves 92 of the clutch outer case 9. In this manner, relative to the clutch outer case 9, the friction plates 1 are relatively immovable in the circumferential direction, i.e., relatively unrotatable, and (relatively) movable in the axial direction. On the other hand, as shown in Fig.5, each of the clutch plates 10 which are disposed between the friction plates 1 has its inner circumference formed with a plurality of spline teeth 10a. The spline teeth 10a are meshed with spline grooves 52 formed in the cylindrical portion 51 of the inner hub 5. Accordingly, relative to the inner hub 5, the clutch plates 10 are relatively unrotatable, and (relatively) movable in the axial direction.

The clutch pressing mechanism 102 comprises a pressure plate 2 as a first pressing member, a diaphragm spring 3 as an elastic load-applying means which is a constant load-applying means, and a retainer 4 as a second pressing member in such a manner that these are coaxially disposed relative to the rotational axis A-A of the clutch mechanism 100. The pressure plate 2 is mounted on an adjuster screw 6 as a disengaging means in such a manner that relative to the adjuster screw, the pressure plate is relatively unrotatable and relatively immovable in the axial direction, and that the pressure plate is disposed facing the friction plates 1 and permitted to directly press the friction plates 1 (for directly pressing the friction plates 1). On the other hand, the retainer 4 is annular and fixed to bolt holes 54 as bolting points formed in protrusions 53 of the inner hub 5 by means of bolts (not shown). The diaphragm spring 3 is disposed between the pressure plate 2 and the retainer 4 in a compressed manner to bias the pressure plate 2 toward the friction plates 1.

The adjuster screw 6 is operated by means of a clutch lever (not shown) which is manually operated by a driver. By operation of the clutch lever by the driver, the pressure plate 2 is moved in the direction of the rotational axis A-A of the clutch mechanism 100, i.e., the direction parallel to the axis of the adjuster screw 6 against elastic force of the diaphragm spring 3. The pressing force which keeps (has kept) the friction plates 1 and clutch plates 10 in pressure contact with each other is thereby removed (The friction plates 1 and the clutch plates 1 is thereby released from the pressing force which keeps (has kept) them in pressure contact with each other).

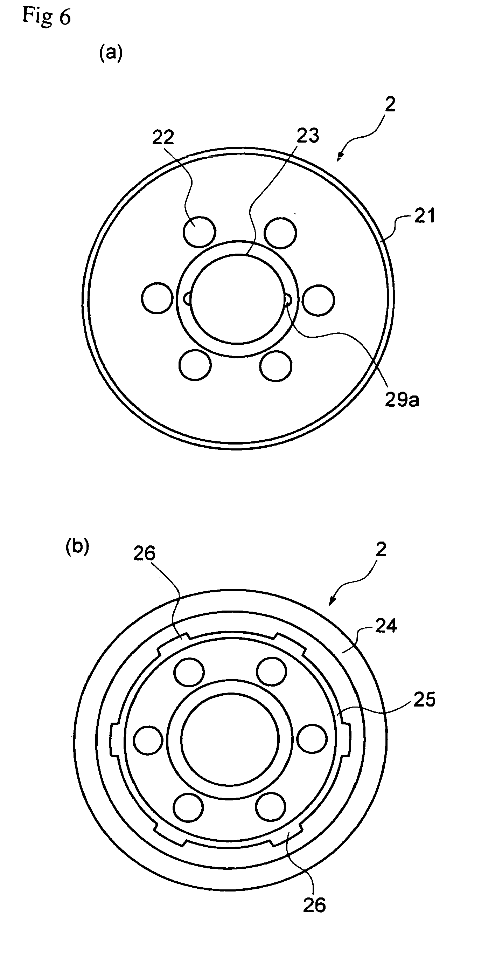

Fig.6(a) is a plan view of the pressure plate 2, and Fig.6(b) is a rear view of the pressure plate 2. The pressure plate 2 is an annular member and has six through holes 22 at positions corresponding to those of the protrusions 53 as bolting points formed in the inner hub 5 in such a manner that each of the through holes is located at a vertex of a hexagon. The pressure plate 2 also has, at its center, an opening 23 having an inner diameter which is larger in comparison with an outer diameter of the adjuster screw 6. Further, on one side of the pressure plate 2, an annular rim 21 is formed along its circumference as shown in Fig.6(a). On the other side of the pressure plate 2, a pressing portion 24 in the form of a protrusion larger than the annular rim 21 in width is circumferentially formed as shown in Fig.6(b). Further, outside the six through holes 22 and inside the pressing portion 24, an annular protrusion 25 is formed. The annular protrusion 25 is formed with spline teeth 26 which radially (outward) protrude toward the pressing portion 24. The spline teeth 26 are so formed as to protrude toward the pressing portion 24 from the annular protrusion 25 at positions corresponding to the vertices of the hexagon at which the through holes 22 are located.

The pressure plate 2 is mounted on the adjuster screw 6 via a connecting member 27 attached to the opening 23. The connecting member 27 has, at its center, an adjuster screw insertion hole 28 having a hexagonal shape, and a tip portion of the adjuster screw 6 is inserted through the insertion hole 28. At the insertion hole 28, the connecting member 27 is fixedly attached to a sectionally hexagonal portion 61 formed integrally with the tip portion of the adjuster screw 6.

On the other hand, at the opening 23 of the pressure plate 2, the connecting member 27 is fixedly attached to the inner circumference of the pressure plate 2 by means of a snap ring (not shown). The adjuster screw 6 and the pressure plate 2 are thereby so connected as to be immovable in A-A direction relative to each other.

Further, nails (claws) 29 provided on the peripheral edge of the connecting member 27 are fitted in notches (recesses) 29a provided in the inner circumference of the pressure plate 2 to fix the connecting member 27 to the pressure plate 2. The adjuster screw 6 and the pressure plate 2 are thereby so connected via the connecting member 27 as to be unrotatable about line A-A as an axis relative to each other.

In the above-described manner, the pressure plate 2 is mounted on the adjuster screw 6 via the connecting member 27. In consequence, the pressure plate 2 and the adjuster screw 6 are so fixedly connected as to be (relatively) immovable in the axial direction and (relatively) unrotatable relative to each other.

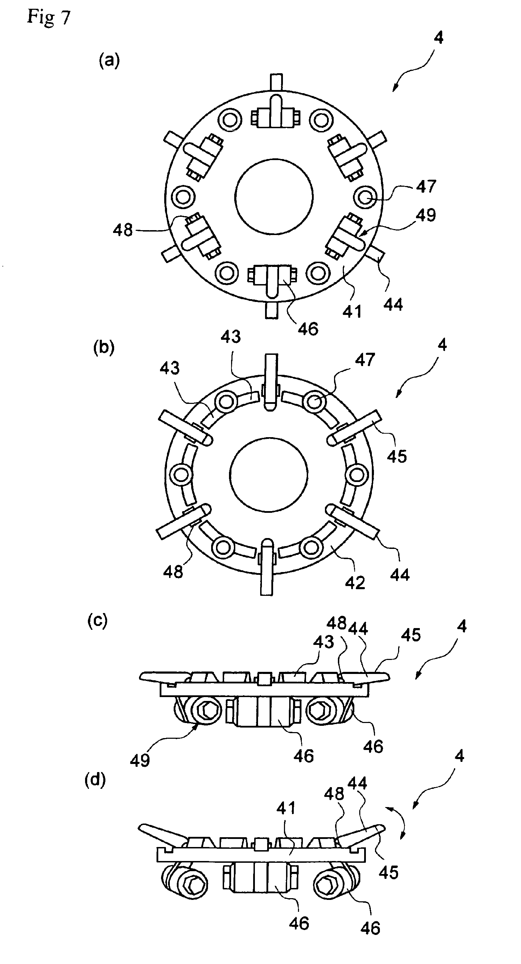

Fig.7(a) is a plan view of the retainer 4, Fig.7(b) is a rear view of the retainer 4, Fig.7(c) is a side view of the retainer 4, and Fig.7(d) is a side view showing L-shaped arms swinging in the retainer 4.

The retainer 4 is an annular member having an annular portion 41 and has a plurality of supports 48 disposed in a ring in the annular portion 41 and centrifugal mechanisms 49 supported by the supports 48 as centrifugal load-applying means (variable load-applying means).

On one side 42 of the annular portion 41, a plurality of protuberances 43 are formed at inner positions relative to the circumference of the annular portion 41 in such a manner that they are spaced by bolt insertion holes 47 and the supports 48 and arranged in a ring.

In each of areas between the centrifugal mechanisms 49, a bolt insertion hole 47 through which a bolt (not shown) is inserted is formed. The bolt insertion holes 47 are formed at positions corresponding to those of the protrusion 53 formed in the inner hub 5 in such a manner that the bolt insertion holes 47 are located at vertices of a hexagon. The bolt insertion holes 47 are respectively aligned with the six through holes 22 of the pressure plate 2, and bolts (not shown) are inserted through the bolt insertion holes 47 and screwed in the bolt holes 54 provided in the protrusions 53 of the inner hub 5.

By the insertion of the bolts through the bolt insertion holes 47 and into the bolt holes 54 formed in the protrusions 53, which are inserted through the through holes 22 of the pressure plate 2, of the inner hub 5 and the screwing of the bolt in the bolt holes 54, the retainer 4 is fixed to the inner hub 5.

In consequence thereof, the retainer 4 and the inner hub 5 are so connected to each other as to be relatively unrotatable and relatively immovable in the axial direction.

As shown in Fig.7(d), each of the centrifugal mechanisms 49 has an L-shaped arm 44 as a swing member which is supported by the respective support 48 to be permitted to swing, a mass body 46 as a cylindrical weight fixedly attached to one end of the L-shaped arm 44, and an operative portion 45 formed at the other end of the L-shaped arm 44. The operative portion 45 is formed at the end of the L-shaped arm 44 on the side of one side 42 of the annular portion 41. On the other hand, the mass body 46 is fixedly attached to the end of the L-shaped arm 44 on the opposite side of the annular portion 41. The operative portion 45 has a smooth abutment surface.

The centrifugal mechanisms 49 are circumferentially disposed at regular intervals on the annular portion 41 (are disposed in the circumferential direction of the annular portion 41 at regular intervals) to thereby be capable of generating a circumferentially uniform variable pressing load.

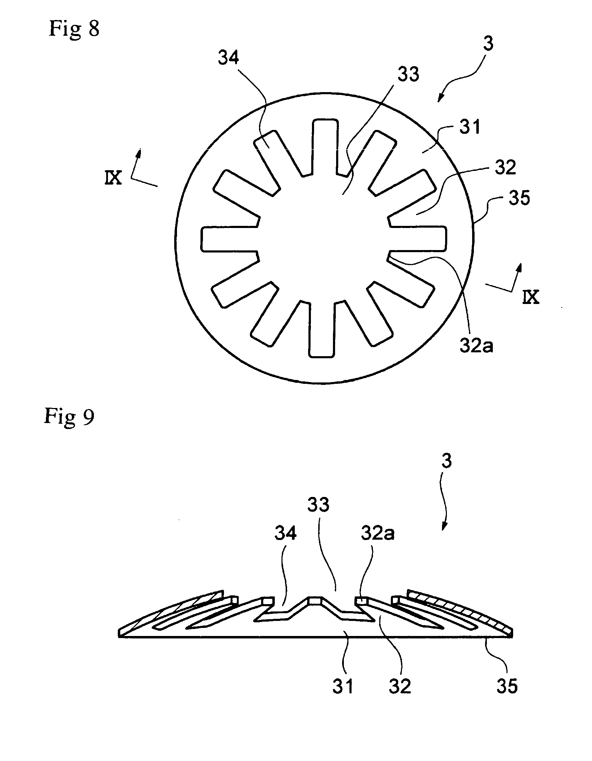

Fig.8 is a plan view of the diaphragm spring 3, and Fig.9 is a sectional view taken along line IX-IX in Fig.8.

The diaphragm spring 3 has an annular portion 31 and a plurality of lever portions 32 which taperingly extend from the inner circumference of the annular portion 31 toward the center of the circle and which have spring function. The lever portions 32 are circumferentially provided at regular intervals, and tips thereof are free ends 32a. At the central portion of the diaphragm spring 3 inside the tips, i.e., free ends 32 a of the lever portions 32, an opening 33 is formed. As a result of the fact that the lever portions 32 are circumferentially provided at regular intervals, slits 34 are formed between the lever portions 32 at regular intervals in such a manner that the slits 34 radially extend outward from the opening 33. As seen from the sectional view shown as Fig.9, the diaphragm spring 3 has a (an inversed) bowl-like shape which is curved with a circumferential edge 35 of the diaphragm spring 3 as a circular rim and with the opening 33 as a top (base), and consequently, an appropriate (appropriately adjustable)? elastic load is generated by the diaphragm spring 3.

The pressure plate 2, the diaphragm spring 3 and the retainer 4 of the clutch pressing mechanism 102, which are constructed as described above, are coaxially disposed as follows, with the rotational axis A-A of the clutch mechanism 100 as a common axis.

As described above, the diaphragm spring 3 is disposed and compressed between the pressure plate 2 and the retainer 4. In the configuration, the diaphragm spring 3 is placed in such a manner that a concavity of the (inverted) bowl which is curved with the opening 33 as a top faces the pressure plate 2. With the diaphragm spring 3 disposed and compressed between the pressure plate 2 and the retainer 4, the pressure plate 2 is placed in such a manner that the one side thereof which is formed with the annular rim 21 faces the diaphragm spring 3, and on the other hand, the other side which is formed with the pressing portion 24, the annular protrusion 25 and the spline teeth 26 faces the friction plates 1. In such a configuration, the pressing portion 24 is located facing the friction plates 1 at a friction plate-pressing position, and at the same time, the spline teeth 26 are so located as to be permitted to fit into grooves 55 formed in an inside of an outer shell of the inner hub 5.

Further, in such a configuration, the protrusions 53 of the inner hub 5 are inserted through the six through holes 22 of the pressure plate 2, and the pressure plate 2 and the inner hub 5 are thereby so combined as to be relatively unrotatable and relatively movable in the axial direction. Consequently, the pressure plate 2 is biased by the diaphragm spring 3 toward the friction plates 1.

The diaphragm spring 3 and the pressure plate 2 are disposed in the above-described manner, and consequently, in a condition where no load is applied to the diaphragm spring 3, the diaphragm spring 3 and the pressure plate 2 are in such a condition that only the circumferential edge 35 of the diaphragm spring 3 and the annular rim 21 of the pressure plate 2 are in contact with each other. Accordingly, the circumferential edge 35 of the diaphragm spring 3 is supported by the annular rim 21 of the pressure plate 2.

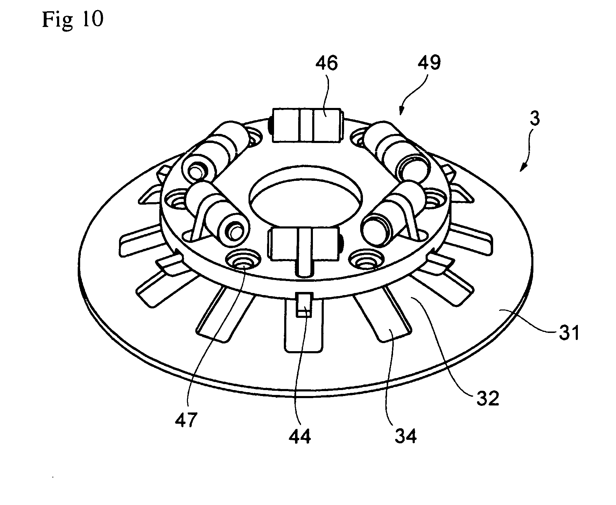

On the other hand, the retainer 4 is disposed in such a manner that the L-shaped arms 44 of the centrifugal mechanisms 49 and the bolt insertion holes 47, which are alternately provided at regular intervals, face the slits 34 of the diaphragm spring 3, as shown in Fig. 10, and that the protuberances 43 abut on the levers 32 of the diaphragm spring 3, as shown in Fig.1(b). The operative portions 45 of the L-shaped arms 44 are permitted to press the pressure plate 2 through the slits 34 of the diaphragm spring 3 at the smoothly formed abutment surfaces thereof.

In the configuration, by fixing the retainer 4 to (the cylindrical portions of) the inner hub 5 with the bolts, the diaphragm spring 3 is disposed and compressed between the retainer 4 and the pressure plate 2. In consequence, the levers 32 of the diaphragm spring 3 are brought into an elastically deformed condition, and under such an elastically deformed condition, the levers 32 are supported by the protuberances 43 of the retainer 4. A constant elastic load is thereby applied to the pressure plate 2 through the annular rim 21 which supports the circumferential edge 35 of the diaphragm spring 3. By the constant elastic load, the pressure plate 2 biases the friction plates 1.

The plurality of spline teeth 26 formed in the pressure plate 2 fit into the grooves 55 formed in the inner hub 5, when the friction plates 1 are pressed by the pressure plate 2. In consequence, the pressure plate 2, the diaphragm spring 3 and the retainer 4 co-rotate together with the inner hub 5, and thus they are not allowed to rotate relative to the inner hub 5.

As described above, in this embodiment, the constant load-applying means which generates the pressing force of the pressing mechanism to keep (bring) the rotational driving force outputting members and the rotational driving force receiving members in(to) contact with each other is comprised of the diaphragm spring 3.

In the clutch mechanism of the present invention, a total of the constant load and the variable load is in excess of a non-slide limit, and (a value of) the constant load is less than the maximum non-slide limit. In other words, in the clutch mechanism of the present invention, since the total of the constant load and the variable load is in excess of a non-slide limit, slide can be prevented. This enables the constant load to be less than the maximum non-slide limit, leading to alleviation (relief) of strain (burden) of grasping a clutch lever. (By virtue thereof, burden of grasping a clutch lever can be relieved.)

Specifically, the constant load with which the pressure plate 2 presses the friction plates 1 is preferably 60% or more and 98% or less, more preferably 65% or more and 95% or less, and most preferably 70% or more and 90% or less of the maximum non-slide limit, i.e., a non-slide limit at a maximum of rotational driving force which is transferred from the rotational driving force input system to the rotational driving force output system.

If the constant load is less than 60% of the maximum non-slide limit, extent of dependence on a variable load to obtain a total pressing load exceeding a non-slide limit is too large so that design of the variable load, which is attributable to centrifugal forces, is difficult. On the other hand, if the constant load exceeds 98% of the maximum non-slide limit, no substantial improvement in operability of the clutch lever is observed.

If the constant load is less than 65% of the maximum non-slide limit, extent of dependence on the variable load to obtain a total pressing load exceeding a non-slide limit is large so that design of the variable load is not easy. On the other hand, if the constant load exceeds 95% of the maximum non-slide limit, improvement in operability of the clutch lever is observed but insufficient.

If the constant load is less than 70% of the maximum non-slide limit, extent of dependence on the variable load to obtain a total pressing load exceeding a non-slide limit is not small so that design of the variable load is hard in terms of accuracy. On the other hand, if the constant load exceeds 90% of the maximum non-slide limit, improvement in operability of the clutch lever is not insufficient but sufficiently comfortable operability of the clutch lever cannot be obtained. In the clutch mechanism of the present invention, the variable load with which the pressure plate 2 presses the friction plates 1 is set (established) as follows.

A total of a value of the variable load at an engine speed at a maximum of the rotational driving force which is transferred from the rotational driving force input system to the rotational driving force output system and a value of the constant load is represented by W, and the variable load is so set (established) that W satisfies the following formula 1.

$$1.01 \leqq W / \text{maximum non-slide limit} \leqq 1.10 \cdots\cdots I$$

If the W / maximum non-slide limit is less than 1.01, safety factor for surely preventing occurrence of slide is not necessarily sufficient. On the other hand, if the W / maximum non-slide limit exceeds 1.10, comfortability in operation of the clutch lever is impaired.

Further, in the clutch mechanism of the present invention, when the engine speed is 1000 rpm to 5000 rpm, the variable load with which the pressure plate 2 presses the friction plates 1 is so set (established) as to (also) satisfy $0.0045 \leqq$ variable load / engine speed (16/rpm) $\leqq 0.025$.

If the value of the variable load / engine speed is less than 0.0045, safety factor for surely preventing occurrence of slide is not necessarily sufficient. On the other hand, if the value of the variable load / engine speed exceeds 0.025, comfortability in operation of the clutch lever is impaired.

In the clutch mechanism of the present invention, as a material for the L-shaped arms 44 and the operative portions 45 of the centrifugal mechanisms 49 of the retainer4, it is preferred that a highly rigid and lightweight material such as an aluminum alloy be used. On the other hand, a material for the mass bodies 46 is not particularly required to have a high rigidity and is, preferably, one having a high specific gravity such as a brass.

By following these, the centrifugal mechanisms 49 are improved in centrifugal force-generation efficiency and enabled to generate a pressing load, which is attributable to centrifugal forces, highly precisely according to the engine speed.

It should be noted that the shape and the manner of mounting of the mass bodies 46 are not restricted to those in this embodiment, so long as there is provided such a structure that the mass bodies 46 are subjected to centrifugal forces and the L-shaped arms 44 thereby swing.

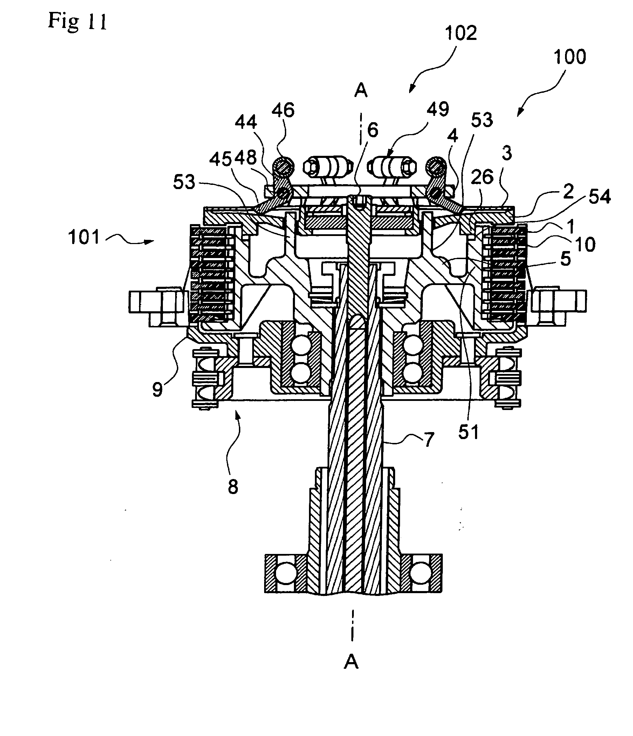

Function of the clutch mechanism 100 in the embodiment 1 will be described with reference to Fig.1(b) and Fig.11. Fig.11 is a sectional view taken along line XI-XI, which shows a condition where a variable load is exerted on the pressure plate 2.

A torque from the crankshaft (not shown) of the engine is transferred to the clutch outer case 9. The torque transferred to the clutch outer case 9 is transferred to the inner hub 5 through the friction plates 1 and the clutch plates 10 which are in press contact with each other, and the torque is further outputted to the transmission input shaft 7.

When a driver grasps the clutch lever, the adjuster screw 6 connected to the clutch lever is moved toward the retainer 4. The pressure plate 2 is thereby moved in the direction away from the friction plates 1. In consequence of this, the pressing force of the pressure plate 2 which has been exerted on the friction plates 1 is removed. Accordingly, the friction plates 1 and the clutch plates 10 are released from the pressure contact therebetween, and "disengagement of clutch" is thereby effected.

At this time, since the pressure plate 2 is biased by the diaphragm spring 3 toward the friction plates 1, it is necessary for moving the pressure plate 2 in the direction away from the friction plates 1 that the driver grasp the clutch lever with a force which exceeds the spring load exerted by the diaphragm spring 3. In other words, in order to effect "disengagement of clutch", the driver is required to grasp the clutch lever with a force which overcomes the elastic load exerted by the elastic load-applying means.

In this connection, the diaphragm spring 3 is disposed between the pressure plate 2 and the retainer 4 in the following manner. On one side of the diaphragm spring 3 which faces the pressure plate 2, the diaphragm spring 3 has its circumferential edge 35 supported by the annular protrusion 21 circumferentially formed in the pressure plate 2, as shown in Fig.1(b). On the other side of the diaphragm spring 3 which faces the retainer 4, the diaphragm spring 3 has its levers 32 supported by the protuberances 43 of the retainer 4.

Accordingly, in order to effect "disengagement of clutch", it is necessary that the levers 32 be so subjected to further compressive elastic deformation as to render the curved diaphragm spring 3 approximately planar, with the points at which the levers 32 of the diaphragm spring 3 are supported by the protuberances 43 of the retainer 4 as fulcra and with the circumferential edge 35 of the diaphragm spring 3 as a force-applying point.

As described above, to effect "disengagement of clutch", it is necessary that the pressure plate 2 be moved with a force which overcomes the rigidity of the levers 32 of the diaphragm spring 3. In other words, the driver is required to grasp the clutch lever with a force which can further elastically deform the levers 32 of the diaphragm spring 3.

On the other hand, transfer of rotational driving force inputted from the input system to the output system, i.e., so-called "engagement of clutch" is effected by releasing the clutch lever which the driver has grasped. In other words, by the release of the clutch lever by the driver, the pressure plate 2 is released from the restraint by the adjuster screw 6. In consequence thereof, the elastic load-applying means which has undergone the compressive elastic deformation (which has elastically deformed more compressedly) between the pressure plate 2 and the retainer 4 biases the pressure plate 2 toward the friction plates 1 to thereby effect "engagement of clutch".

In this connection, if the points (fulcra) at which the diaphragm 3 is pressed by the protuberances 43 of the retainer 4 are present at locations near the bases of the levers 32, i.e., if an inner diameter of the ring in which the plurality of protuberances 43 are disposed (,viz., retainer ring diameter) is large, the distances between the fulcra and the force-applying point which is the circumferential edge 35 of the diaphragm spring 3 are small. Accordingly, in such a case, a force (load) necessary for elastically deforming the levers 32 of the diaphragm spring 3 is larger (high), and thus, in order to effect "disengagement of clutch", the driver is required to hold the clutch lever with such a larger force (with a larger force in excess of the load).

Therefore, in order to reduce the elastic load of the levers 32 of the diaphragm spring 3 with a view to reducing the force necessary for operating the clutch lever, it is effective to increase the distances between the fulcra and the force-applying point. This is realized by shifting the points at which the diaphragm spring 3 is pressed by the protuberances 43 of the retainer 4 toward the tips of the levers 32. In other words, it is effective to reduce the retainer ring diameter.

When the retainer ring diameter is reduced, a load ? necessary for moving the pressure plate 2 to elastically deform the levers 32 of the diaphragm spring 3 is reduced to lead to reduction of a force with which the driver grasps the clutch lever.

While the force necessary for operating the clutch lever is reduced by reducing the retainer ring diameter as described above, tightness of the pressure contact between the friction plates 1 and the clutch plates 10 is reduced. This is because the distances between the fulcra as the points at which the diaphragm spring 3 is pressed by the protuberances 43 of the retainer 4 and the force-applying point are increased, and accordingly, the force with which the diaphragm spring 3 biases the pressure plate 2 toward the friction plates 1, namely, the elastic load is reduced.

To cope therewith, as structures for compensating the decrement of the elastic load, the centrifugal mechanisms 49 function which are mounted on the retainer 4 (function) as shown in Fig. 11.

As described above, in a condition where the rotational driving force inputted from the input system is transferred to the output system, i.e., in a "clutch is in engagement" condition, the retainer 4 is rotated together with the output system. By the rotation of the retainer 4, a centrifugal force toward the outside of the retainer 4 is exerted on each of the mass bodies 46 attached to the L-shaped arms 44. By the centrifugal forces, the mass bodies 46 are moved in the directions away from the center of the retainer 4 and the L-shaped arms 44 swing on the supports 48. The operative portions 45 of the L-shaped arms 44 are urged to press the pressure plate 2 through the slits 34 of the diaphragm spring 3. Accordingly, when number of revolutions of the output system is increased, number of revolutions of the retainer 4 connected thereto is also increased to increase the centrifugal force toward the outside of the retainer 4 which is exerted on each of the mass bodies 46. The forces of the operative portions 45 of the L-shaped arms 44 to bias the pressure plate 2 are thereby increased. The forces to bias the pressure plate 2 constitute a variable centrifugal load.

In this manner, the increase in the centrifugal forces exerted on the mass bodies with the increase in the number of revolutions of the output system is utilized to thereby compensate the decrease in the elastic load with (the increase in) the biasing load generated by the centrifugal forces, enabling the pressure contact between the friction plates 1 and the clutch plates 10 which is capable of preventing (occurrence of) slide therebetween to be ensured.

As described above, according to the clutch mechanism 100, the reduction of the elastic load by the diaphragm spring 3 is realized by reducing the retainer ring diameter. Accordingly, by the extremely simple structure, such a clutch mechanism is obtainable that a force required for operating a clutch lever is redduced. Further, since the reduction in the elastic load can be compensated with the centrifugal load, necessary tightness of the pressure contact between the friction plates 1 and clutch plates 10 can be ensured even in a condition where engine speed is high.

Further, when a two-wheeled motor vehicle which employs the clutch mechanism according to the present invention is driven, a force with which a driver grasps a clutch lever and which the driver keeps after "disengagement of clutch" in gear changing is not so considerable. In regard to this, a description will be given with reference to the side views of the retainer 4 in Fig.7.

Fig.7(d) is a side view showing a "clutch is in engagement" condition, i.e., a condition of the retainer 4 when a driver does not hold (grasp) the clutch lever, and Fig.7(c) is a side view showing a "clutch is in disengagement" condition, i.e., a condition of the retainer 4 when a driver holds (grasps) the clutch lever.

First, in the "clutch is in engagement" condition, centrifugal forces toward the outside of the retainer 4 are exerted on the mass bodies 46 of the L-shaped arms 44 by rotation of the retainer 4, as shown in Fig.7(d), and thus the operative portions 45 are in contact with the pressure plate 2.

Next, in the "clutch is in disengagement" condition where a driver holds the clutch lever, i.e., a condition where the pressure plate is moved toward the diaphragm spring and the diaphragm spring is compressed against the retainer 4, the L-shaped arms 44 with which the retainer 4 is provided are reversely pressed by the pressure plate 2. At this time, the L-shaped arms 44 swing on the supports 48 in such a manner that the mass bodies 46 are moved toward the center of the retainer 4, as shown in Fig.7(c). In this manner, since the mass bodies 46 are located at inner positions in the retainer 4 in the "clutch is in disengagement" condition as compared with the "clutch is in engagement" condition shown in Fig.7(d), centrifugal forces exerted on the mass bodies 46 by inertial rotation of the retainer 4 are smaller.

As described above, in the clutch mechanism of the present invention, when the engine speed increases and exceeds a certain level, the centrifugal load increases and the force required for operating the clutch lever thereby becomes large. However, when the clutch lever is once grasped, the centrifugal load becomes low. Accordingly, the force for maintaining the clutch mechanism (in the "clutch is in disengagement" condition) when the clutch lever is grasped is not so considerable.

In a process where the two wheeled motor vehicle stops, as the number of revolutions of the output system decreases, the number of revolutions of the retainer 4 decreases to reduce the centrifugal load. Further, in a condition where the two wheeled motor vehicle has completely stopped, no centrifugal load is exerted and only the elastic load is exerted. Accordingly, a force to grasp the clutch lever and maintain the grasping of the clutch lever until the next start is markedly reduced as compared with conventional clutches.

As described in the above, according to the clutch mechanism of the present invention, a large number of people are enabled to enjoy driving of a two-wheeled motor vehicle irrespective of their physical strengths, while maintaining the force with which the clutch pressing mechanism presses the friction plates sufficiently, i.e., while ensuring the tightness of the pressure contact between the friction plates and the clutch plates.

(Embodiment 2)

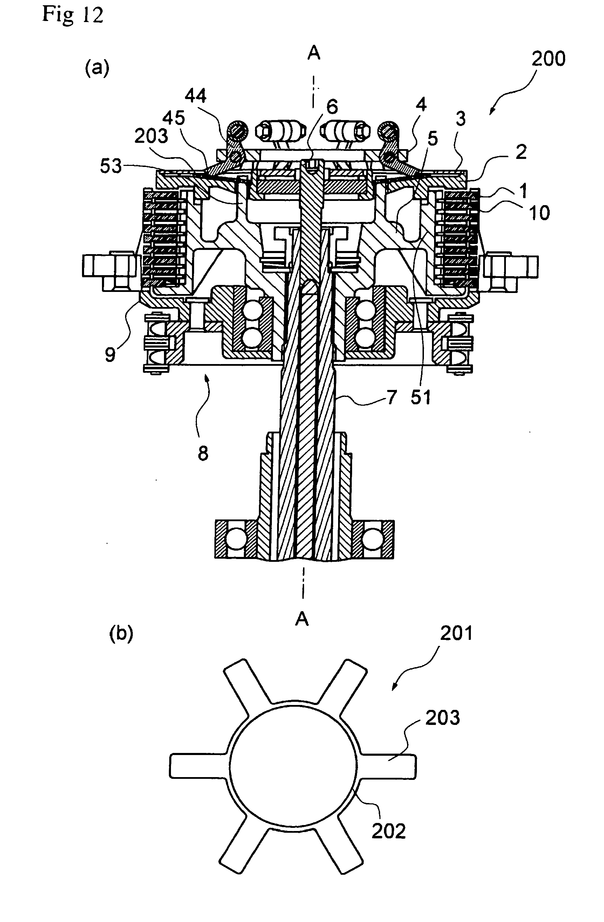

Fig. 12(a) is a sectional view of a clutch mechanism 200 as an embodiment 2 of the present invention, and Fig. 12(b) is a plan view of a base plate 201.
The embodiment 1 has such a structure that the operative portions 45 of the L-shaped arms 44 of the retainer 4 are brought into direct contact with the pressure plate 2 to apply a load to the pressure plate. On the other hand, the clutch mechanism 200 has such a structure that the base plate 7 as a centrifugal load transfer member as shown in Fig.12(b) is placed between the operative portions 45 of the L-shaped arms 44 and the pressure plate 2, as shown in Fig.12(a). With respect to the other structural features, this embodiment is the same as the embodiment 1.
The base plate 201 has an annular portion 202 and plate portions 203 extending outward from the circumferential edge of the annular portion 202.
The plate portions 203 are located corresponding to, of the slits 34 of the diaphragm spring 3, those 34 which correspond to the L-shaped arms 44, and the plate portions have substantially the same shape as the slits 34.
By providing the base plate 201, the operative portions 45 of the L-shaped arms 44 bias the pressure plate 2 via the plate portions 203. By virtue of this, an area in which a centrifugal load is exerted on the pressure plate 2 is larger than that in the case where the pressure plate 2 is biased only with the operative portions 45 of the L-shaped arms 44.
Accordingly, the centrifugal load generated by swings of the L-shaped arms 44 is efficiently transferred to the pressure plate 2.

(Embodiment 3)

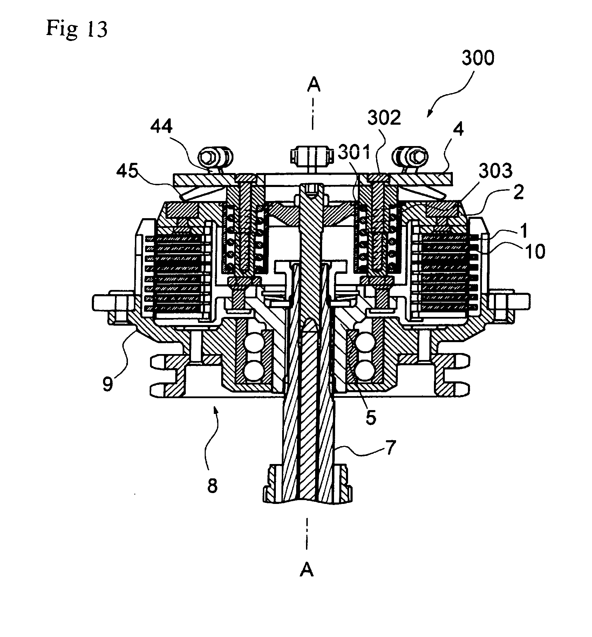

Fig. 13 is a sectional view of a clutch mechanism 300 as an embodiment 3 of the present invention.
As described in the above, each of the clutch mechanism 100 in the embodiment 1 and the clutch mechanism 200 in the embodiment 2 has such a structure that a diaphragm spring is used as an elastic load-applying means. On the other hand, the clutch mechanism 300 in the embodiment 3 uses coil springs 8 as elastic load-applying means. With respect to the other structural features, this clutch mechanism is the same as the clutch mechanism 100.
A retainer 4 is fixed to an inner hub 5 with bolts 302, and the coil springs 301 are so placed as to surround the bolts 302. By the fixing of the retainer 4, the coil springs 301 are subjected to a load by the retainer 4. The coil springs 301 apply pressing forces to a pressure plate 2 via spring cups 303. In other words, the coil springs 301 are so disposed as to be compressed between the retainer 4 and the pressure plate 2.
A value of the load generated by the elastic load-applying means in the clutch mechanism 300 is determined by the biases toward friction plates 1 which are applied to the pressure plate 2 by the coil springs 301. Accordingly, in this embodiment, ? constant load applying means for generating the pressing force of the pressing mechanism which brings rotational driving force outputting members and rotational driving force receiving members into contact with each other are constructed of the coil springs 301.
A value of a load generated by ? centrifugal load-applying means is determined by centrifugal forces which are exerted on mass bodies 46 by rotation of the retainer 4 associated with rotation of an output system to move the mass bodies toward outside of the retainer 4. In other words, the value of the centrifugal load is determined by biases which are applied to the pressure plate 2 by operative portions 45 of L-shaped arms 44 by the centrifugal forces exerted on the mass bodies 46.

(Embodiment 4)

A clutch mechanism as an embodiment 4 of the present invention will be described below. The clutch mechanism of the embodiment 4 has a retainer 4 having specific characteristics, and with respect to the other structural features, it is the same as the clutch mechanism in the embodiment 1.
Fig.14 is a perspective view of the retainer 4 used in the clutch mechanism of the embodiment 4 of the present invention, Fig.15 is a plan view of the retainer 4, Fig.16 is a rear view of the retainer 4, Fig. 17 is a side view of the retainer 4, and Fig. 18 is a side view showing the L-shaped arms swinging in the retainer 4.
In the retainer 4 in the clutch mechanism of the embodiment 4, an annular portion 41 comprises an annular part 41a and an annular part 41b which are joined together. (In the clutch mechanism of the embodiment 4, the retainer 4 has an annular portion 41 comprising an annular part 41a and an annular part 41b which are joined together.)
As a material for the annular part 41a, a (highly) rigid lightweight material such as an aluminum alloy is used. On the other hand, as a material for the annular part 41b, an iron·based (highly) rigid material such as a stainless steel is used. The annular parts 41a and 41b as described above are joined to each other with rivets 50,···, and the annular portion 41 is thereby formed.

In the clutch mechanism of the embodiment 4, a plurality of supports 48 are disposed in a ring in the annular part 41b for which an iron-based (highly) rigid material such as a stainless steel is used, and a centrifugal mechanism 49 is supported by each of the supports 48. The annular part 41b has a side 42 facing a diaphragm spring 3, and on the side 42, a plurality of protuberances 43 are so formed as to be disposed in a ring.

Also in the clutch mechanism of the embodiment 4, the retainer 4 is disposed in such a manner that the protuberances 43 abut on levers 32 of the diaphragm spring 3, as shown in Fig.1(b).
Further, also in the clutch mechanism of the embodiment 4, the retainer 4 is fixed to bolt holes of an inner hub 5 with bolts, and the diaphragm spring 3 is thereby disposed and compressed between the retainer 4 and a pressure plate 2. In consequence, the levers 32 of the diaphragm spring 3 are brought into an elastically deformed condition, and under such an elastically deformed condition, the levers 32 are supported by the protuberances 43 of the retainer 4. A constant elastic load is thereby applied to the pressure plate 2 through the annular rim 21 which supports the circumferential edge 35 of the diaphragm spring 3. By the constant elastic load, the pressure plate 2 biases the friction plates 1.

Even under such a condition where the protuberances 43 abut on the levers 32 of the diaphragm spring 3 to elastically deform the levers 32, since the annular part 41b and the protuberances 43 integral therewith are made of a stainless steel (or the like) and thus highly abrasion resistant, no substantial change in the elastic load generated by the diaphragm spring 3 due to abrasion of the protuberances 43 is caused. Accordingly, no substantial change with time is caused in a force required for operating a clutch lever.
In addition, the material for the annular part 41a is a (highly) rigid lightweight material such as an aluminum alloy, consequently enabling the retainer 4 as a whole to be lightweight.

(Embodiment 5)

Subsequently, a clutch mechanism as an embodiment 5 of the present invention will be described below. The clutch mechanism of the embodiment 5 has a retainer 4 also having specific characteristics, and with respect to the other structural features, it is the same as the clutch mechanism in the embodiment 1.

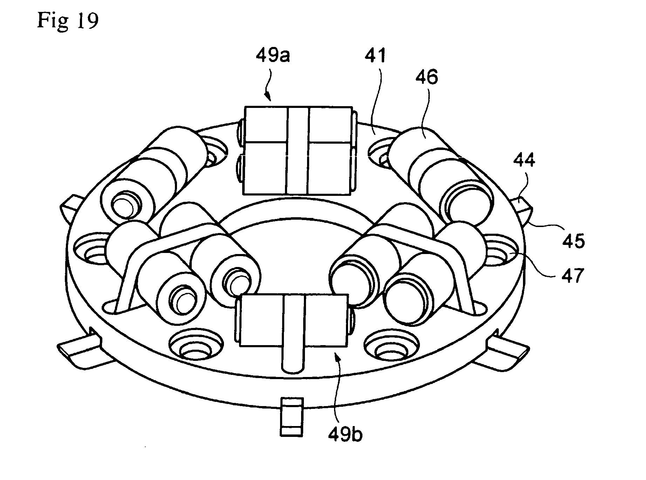

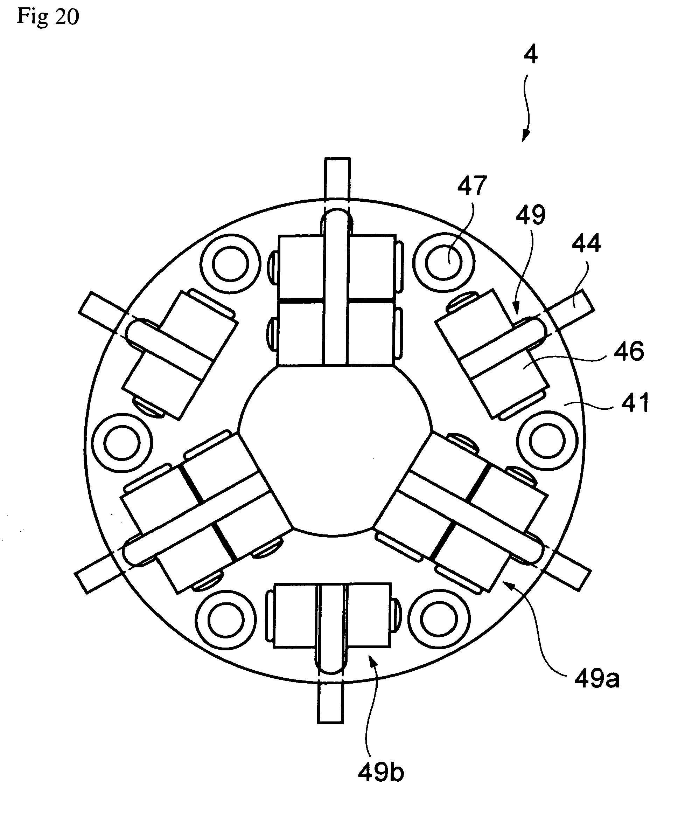

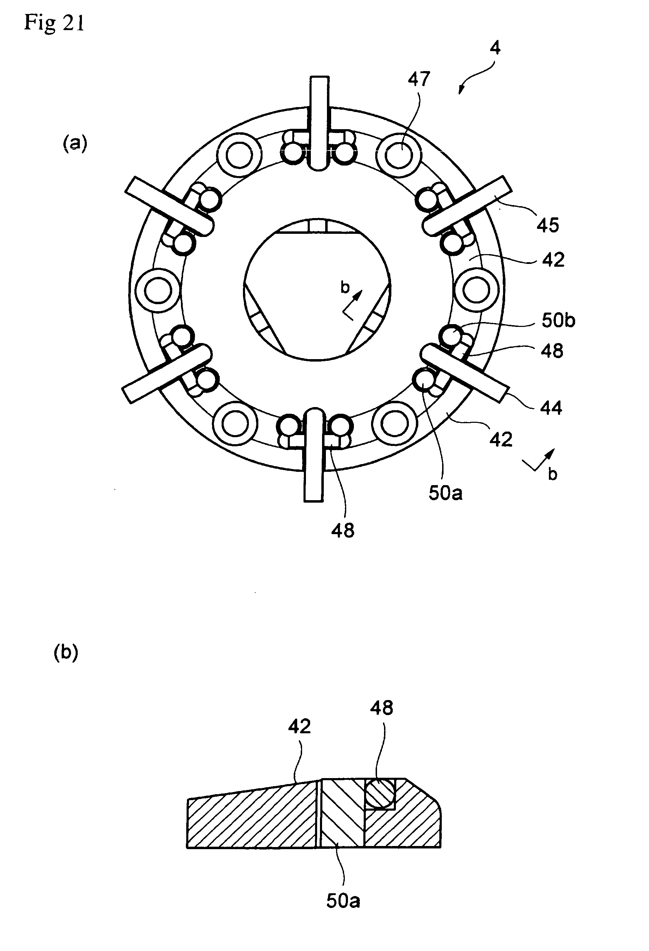

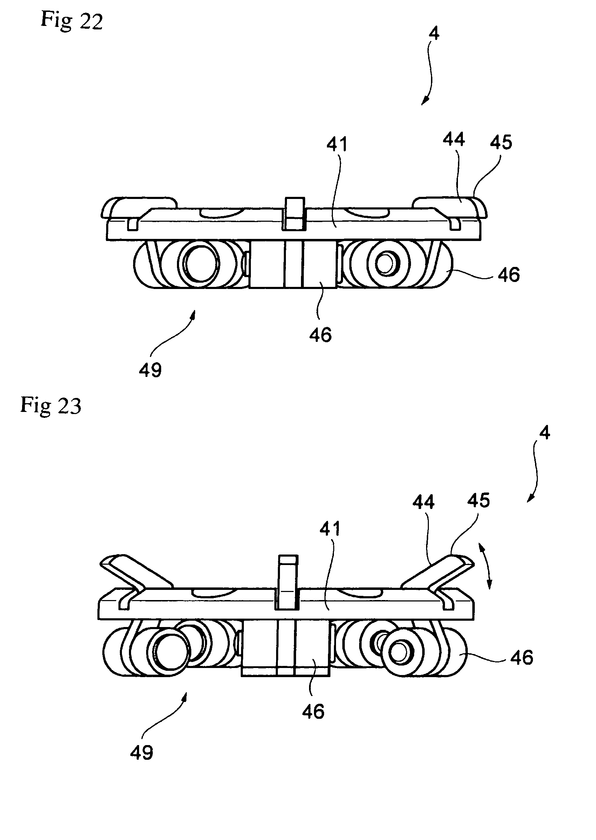

Fig. 19 is a perspective view of the retainer 4 used in the clutch mechanism of the embodiment 5 of the present invention, Fig.20 is a plan view of the retainer 4 used in the embodiment 5, Fig.21(a) is a rear view of the retainer 4 used in the embodiment 5, Fig.21(b) is a sectional view taken along line b-b in Fig.21(a), Fig.22 is a side view of the retainer 4 used in the embodiment 5, and Fig.23 is a side view showing the L-shaped arms swinging in the retainer 4 used in the embodiment 5.
In the retainer 4 in the clutch mechanism of the embodiment 5, a material for an annular portion 41 is a (highly) rigid lightweight material such as an aluminum alloy. (In the clutch mechanism of the embodiment 5, the retainer 4 has an annular portion 41 made of a (highly) rigid lightweight material such as an aluminum alloy.) In the annular portion 41, a plurality of supports 48 are disposed in a ring, and a centrifugal mechanism 49 is supported by each of the supports 48.
The annular portion 41 has a side 42 facing a diaphragm spring 3, and rivets 50a, 50b made of a stainless steel are implanted beside ends of each of the supports 48 on the side 42 in such a manner that end faces of the rivets 50a, 50b which face the diaphragm spring 3 are so exposed as to be substantially flush with the side 42.

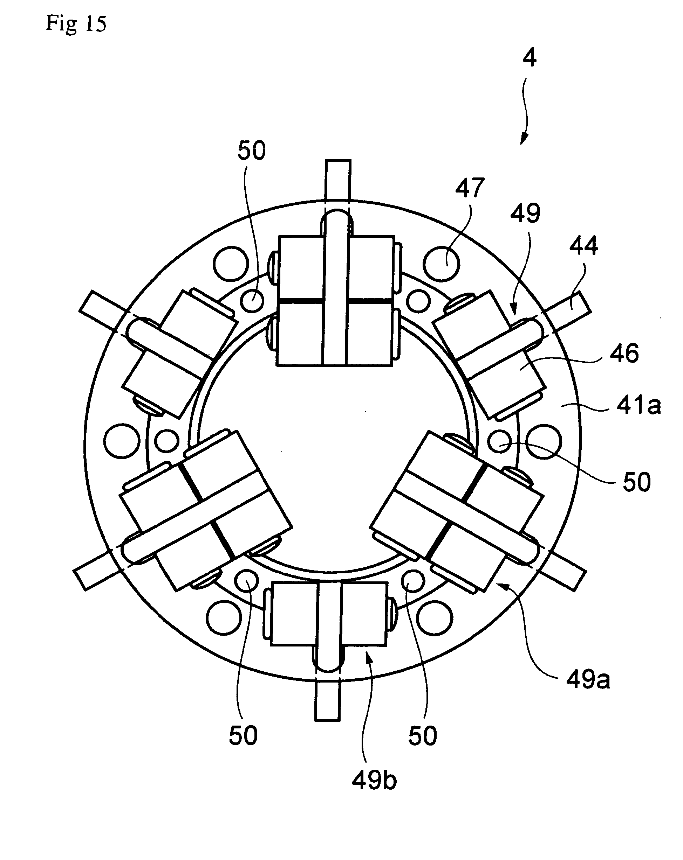

As different from the foregoing embodiments, in the embodiment 5, no protuberances 43 such as those in the retainer 4 used in the clutch mechanism of the embodiment 4 shown in Fig. 15 are formed on the side 42 which is the diaphragm spring 3-facing side of the annular portion 41. In the clutch mechanism of the embodiment 5, the retainer 4 is disposed in such a manner that the end faces of the rivets 50a, 50b abut on levers 32 of the diaphragm spring 3.
Also in the clutch mechanism of the embodiment 5, the retainer 4 is fixed to bolt holes of an inner hub 5 with bolts, and the diaphragm spring 3 is thereby disposed and compressed between the retainer 4 and a pressure plate 2.

In the clutch mechanism of the embodiment 5, (however,) the annular portion 41 is, substantially in whole, made of a (highly) rigid lightweight material such as an aluminum alloy, thus enabling the retainer 4 as a whole to be very lightweight. Further, the rivets 50a, 50b of which the end faces abut on the levers 32 of the diaphragm spring 3 are made of a stainless steel and thus highly abrasion resistant, and no substantial change in the elastic load generated by the diaphragm spring 3 due to abrasion of the rivets 50a, 50b is caused. Accordingly, no substantial change with time is caused in a force required for operating a clutch lever.

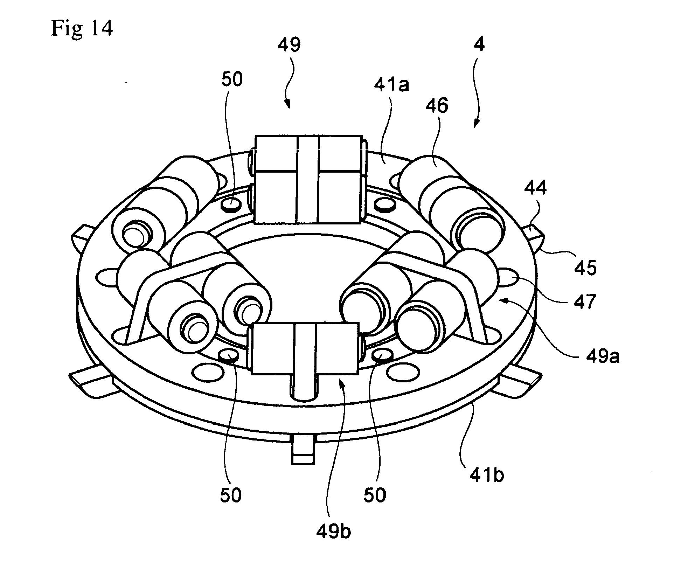

It should be noted in the above-described clutch mechanisms of the embodiments 4 and 5 that, as the centrifugal mechanisms 49 supported by the supports, centrifugal mechanisms 49a each having two mass bodies 46 and centrifugal mechanisms 49b each having one mass body 46 are alternately disposed, as shown in Figs. 14, 15 or Figs.19, 20.

In this manner, by appropriately selecting the number of the mass bodies 46 of the centrifugal mechanisms 49 supported by the supports 48, centrifugal forces (to be) generated can be adjusted. Further, the centrifugal mechanisms 49 supported by the supports 48 are provided on the retainer 4 in such a positional relationship as to be located at vertices of a hexagon. This enables the centrifugal mechanisms 49a each having two mass bodies 46 and the centrifugal mechanisms 49b each having one mass body 46 to be alternately disposed. Accordingly, in terms of the retainer 4 as a whole, a well-balanced, i.e., uniform variable (centrifugal) load is generated.

Of the clutch mechanisms of the above-described embodiments, the clutch mechanism in the embodiment 1 uses a diaphragm spring as an elastic load-applying means, and the clutch mechanism in the embodiment 3 uses coil springs as an elastic load-applying means.

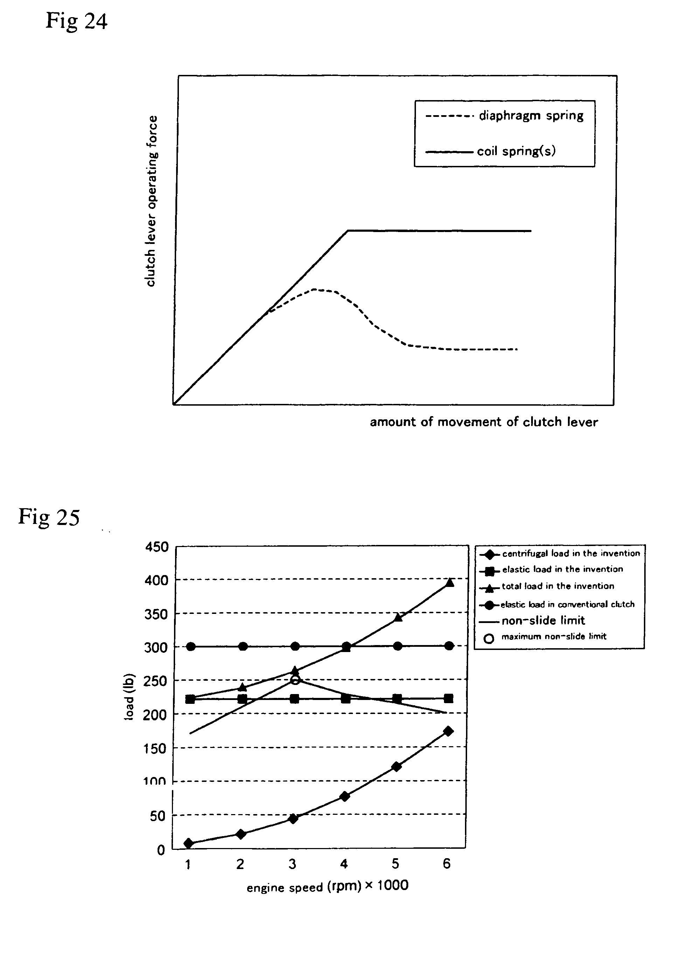

Now, difference between characteristics of a diaphragm spring and coil springs will be described with reference to "clutch lever operating force"-"amount of clutch lever movement" curves in Fig.24. In Fig.24, the abscissa axis represents an amount of movement of a clutch lever, and the ordinate axis represents a force required for operating a clutch lever.

When coil springs are used, the coil springs are compressed in proportion to the amount of movement of the clutch lever, viz., amount of driver's grasping of the clutch lever. Accordingly, as shown in Fig.24, a force for grasping the clutch lever, viz., "clutch lever operating force" increases as the driver grasps the clutch lever more deeply, and thus a large force is required when the clutch lever is grasped deeply to the limit and this condition is maintained.

In comparison with this, a case where a diaphragm spring is used will be described. In an initial stage of grasping of a clutch lever, viz., a stage where the diaphragm spring in a curved state is subjected to elastic deformation, a force with which a driver grasps the clutch lever is substantially the same as in the case where the coil springs are used, as shown in Fig.24. However, in a condition where the clutch lever is grasped to the limit and the diaphragm spring is elastically deformed substantially to flatness, a force for grasping the clutch and keeping the grasping is markedly small as compared with that in the case where the coil springs are used.

As described above, the diaphragm spring has excellent characteristics in operability of the clutch lever, as compared with the coil springs.

(Example)

In the following, Example of the clutch mechanism as the embodiment 2 of the present invention will be given making a comparison with Comparative Example of a conventional clutch mechanism. In this connection, a two-wheeled motor vehicle used in this Example is a 2004 model of Harley Davidson® FLSTF/1455cc.

Data on Example of the present invention is shown in Table 1.

The clutch mechanism according to this Example has a diaphragm spring as an elastic load-applying means which biases a pressure plate toward friction plates with a constant load irrespective of number of revolutions of an output system, and centrifugal load-applying means which bias the pressure plate toward the friction plates with a load that increases as the number of revolutions of the output system increases. Accordingly, the elastic load and the centrifugal load were so determined that at an engine speed of 3000 rpm at which maximum torque was generated, the total of the elastic load by the diaphragm spring and the centrifugal load were 246 1b, which was the ? maximum non-slide limit, or more.

Specifically, the elastic load was set (selected) to be 220 1b. The value of 220 1b of the elastic load is 89% of 246 1b as the maximum non-slide limit. To obtain 220 1b as the set (selected) elastic load, the retainer ring diameter was determined to be 75 mm.

Further, in the clutch mechanism of this Example, the centrifugal load as a variable load with which the pressure plate 2 biases the pressure plates 1 was set to be 4.8 1b at 1000 rpm, 19.2 1b at 2000 rpm, 43.2 1b at 3000 rpm, 76.7 1b at 4000 rpm, and 119.9 1b at 5000 rpm.

This is because the engine speed at which the maximum non-slide limit was determined was 3000 rpm and the maximum non-slide limit was 246 1b, and accordingly, the variable load was so set as to satisfy W / maximum non-slide limit = (220 + 43.2) / 246 = 1.070.

At the same time, the variable load was so set as to satisfy $0.0048 \leqq$ variable load / engine speed (1b / rpm) $\leqq 0.024$, when the engine speed was in a range of 1000 rpm to 5000 rpm.

By providing the constant load and the variable load as described above, the safety factor for ensuring slide prevention is obtained and comfortable clutch operability is attained.

In the clutch mechanism, its swing members were made of an aluminum alloy and its mass bodies were made of a brass.

[Table 1]

| A engine speed | elastic load | B centrifugal load | total load | force required for operating clutch lever | B/A | ratio of the required force to that of conventional mechanism |
|---|---|---|---|---|---|---|
| (rpm) | (1b) | (1b) | (1b) | (Kg) | | (%) |
| 1000 | 220 | 4.8 | 224.8 | 4.8 | 0.0048 | 60 |

(continued)

| A engine speed | elastic load | B centrifugal load | total load | force required for operating clutch lever | B/A | ratio of the required force to that of conventional mechanism |
|---|---|---|---|---|---|---|
| (rpm) | (1b) | (1b) | (1b) | (Kg) | | (%) |
| 2000 | 220 | 19.2 | 239.2 | 5.3 | 0.0096 | 65 |
| 3000 | 220 | 43.2 | 263.2 | 6.0 | 0.0144 | 75 |
| 4000 | 220 | 76.7 | 296.7 | 7.3 | 0.0192 | 90 |
| 5000 | 220 | 119.9 | 339.9 | 8.7 | 0.0240 | 108 |

(Comparative Example)

Data on a conventional clutch mechanism is shown in Table 2. Further, a graph which compares the data shown in Table 1 with the data shown in Table 2 is shown in Fig.25. The conventional clutch mechanism (taken) as Comparative Example comprises a pressure plate, a diaphragm spring and a retainer, and as opposed to Example, it has such a structure that the retainer is provided with no centrifugal mechanisms. Accordingly, the conventional clutch mechanism in this Comparative Example uses only such an elastic load that the diaphragm spring presses the pressure plate with a constant load irrespective of an engine speed.

The clutch mechanism in Comparative Example has a retainer ring diameter of 95mm. When this is compared with the clutch mechanism in the above-described Example, it is understood that the positions at which the levers of the diaphragm spring are pressed by the protuberances of the retainer in the clutch mechanism in Example are inward shifted by 20mm as compared with those in the clutch mechanism in Comparative Example.

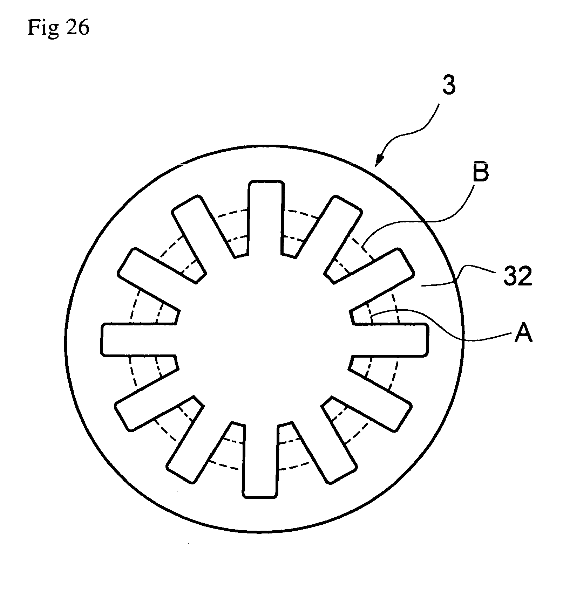

In Fig.26, positions shown in levers 32 of the diaphragm spring 3 in dash-dotted solid line A are those at which the levers 32 are pressed by protuberances 43 of a retainer 4 in Example, and positions shown in dotted line B are those at which levers 32 of the diaphragm spring 3 are pressed by protuberances 43 of the retainer 4 in Comparative Example. As shown in Fig.26, the positions shown in dash-dotted line A are located nearer to the tips of the levers 32 than the positions shown in dotted line B. In this manner, the positions at which the levers 32 of the diaphragm spring 3 are pressed by the protuberances of the retainer are so adjusted as to be located nearer to the tips of the levers 32 (adjusted toward the tips of the levers 32), and the levers 32 are thereby elastically deformed more easily. The elastic load in the clutch mechanism of Comparative Example is constant at 300 1b irrespective of the engine speed. In this case, a force required for operating a clutch lever is constant at 8.0 kg.

The ground on which the elastic load is set to be 300 1b is as follows. In a two-wheeled motor vehicle in this Comparative Example, the maximum torque is 11.0 kg·m at 3000 rpm, and from this value, the minimum of a load capable of preventing occurrence of slide between friction plates and clutch plates, i.e., the maximum non-slide limit is calculated to be 246 lb. By providing the maximum non-slide limit of 246 1b with a margin, 300 1b is set as the elastic load.

As described above, in the clutch mechanism in the two-wheeled motor vehicle of Comparative Example, the elastic load is determined from the value of the maximum torque and set to be constant irrespective of the engine speed. Accordingly, the elastic load is in excess of a required level in a range where the maximum torque is not generated, particularly in a range where the engine speed is low. Because of this reason, in the two-wheeled motor vehicle in Comparative Example which has a large engine torque, a force required for operating a clutch lever is large.

[Table 2]

| engine speed | elastic load | force required for operating clutch lever |
|---|---|---|
| (rpm) | (1b) | (Kg) |
| 1000 | 300 | 8.0 |
| 2000 | 300 | 8.0 |
| 3000 | 300 | 8.0 |
| 4000 | 300 | 8.0 |

| | (continued) | |
| --- | --- | --- |
| engine speed | elastic load | force required for operating clutch lever |
| (rpm) | (1b) | (Kg) |
| 5000 | 300 | 8.0 |

It is seen from Table 1 and Fig.25 that in the clutch mechanism of Example, the total of the constant load and the variable load

① exceeds the non-slide limits over the whole range of the engine speed, and
② is less than the maximum non-slide limit at an engine speed of 2000 rpm or lower and is more than the maximum non-slide limit at an engine speed of 3000 rpm, at which the maximum torque is generated, or higher due to the increase of the centrifugal load.

As described above, the clutch mechanism according to the present invention has the centrifugal mechanisms which generate the centrifugal load that increases as the engine speed increases. Accordingly, the total of the elastic load and the centrifugal load is so variable as to exceed the maximum non-slide limit at the engine speed at which the maximum torque is generated. By virtue of this, while enabling reduction of the elastic load, it is possible to ensure such a total load that the press contact between the friction plates and the clutch plates is capable of preventing slide occurrence therebetween.
By reducing the elastic load to a level lower than the maximum non-slide limit, i.e., by rendering the retainer ring diameter smaller as compared with that in the conventional clutch mechanism, as is evident from Table 1, the force required for operating the clutch lever is reduced to be lower at an engine speed up to 4000 rpm as compared with that in the conventional clutch mechanism.
Further, it is seen from Fig.25 that the total load in Example becomes equal to the elastic load in the conventional clutch mechanism when the engine speed exceeds 4000 rpm, and conversely, the total load in Example is in excess of the elastic load in the conventional clutch mechanism at 5000 rpm due to the increase of the centrifugal load. As is also seen from Table 1, the force required for operating the clutch lever is also greater than that in the conventional clutch mechanism at an engine speed of 4000 rpm or more.
In a two-wheeled motor vehicle to which the present invention is mainly intended to be applied, however, its engine torque is likely to be high. In a case of such a two-wheeled motor vehicle, its engine speed is likely to be, at most, of the order of 3000 rpm during ordinary running.
It is, therefore, apparent that in ordinary running, use of the clutch mechanism according to the present invention enables the force required for operating a clutch lever to be realized which is reduced as compared with that of the conventional clutch mechanism.

Industrial Applicability

As described above, the present invention is applicable to a clutch mechanism of a motor vehicle such as a two-wheeled motor vehicle, a four-wheeled motor vehicle or the like.

Brief Description of Drawings

[Fig.1] Fig.1(a) is a plan view of a clutch mechanism as an embodiment 1 of the present invention, and Fig.1(b) is a sectional view taken along line I(b)-I(b) in Fig.1(a).

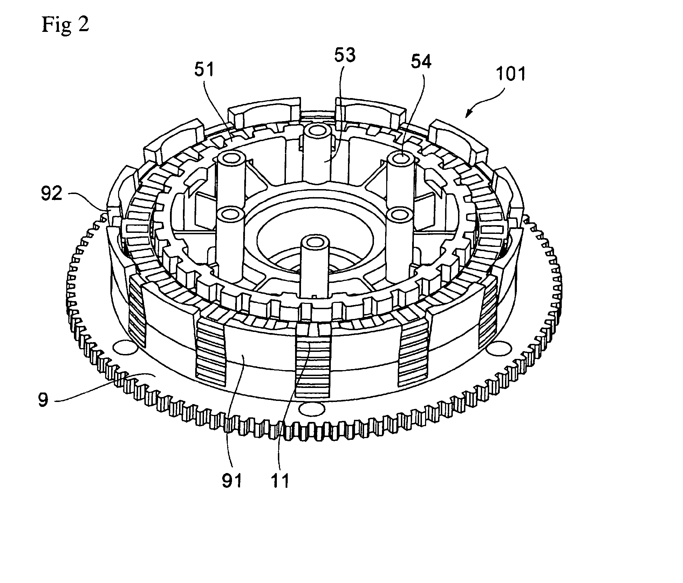

[Fig.2] Fig.2 is a perspective view of a (main) body of the clutch mechanism of the embodiment 1 of the present invention.

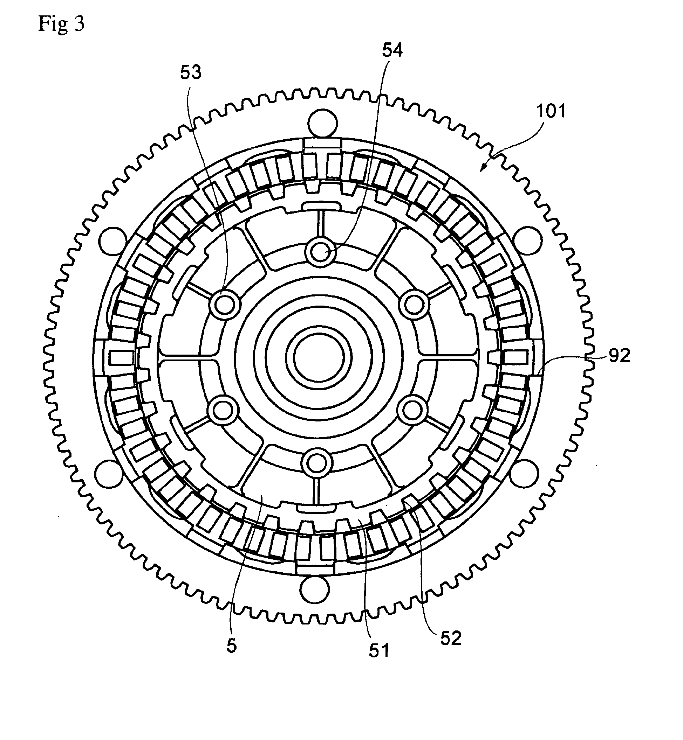

[Fig.3] Fig.3 is a plan view of a (main) body of the clutch mechanism of the embodiment 1 of the present invention.
[Fig.4] Fig.4 is a plan view of a friction plate as a constituent of the (main) body of the clutch mechanism of the embodiment 1 of the present invention.
[Fig.5] Fig.5 is a plan view of a clutch plate as a constituent of the (main) body of the clutch mechanism of the embodiment 1 of the present invention.
[Fig.6] Fig.6(a) is a plan view of a pressure plate in the clutch mechanism of the embodiment 1 of the present invention, and Fig.6(b) is a rear view of the pressure plate of the clutch mechanism of the embodiment of the present invention.

[Fig.7] Fig.7(a) is a plan view of a retainer in the clutch mechanism of the embodiment 1 of the present invention, Fig.7(b) is a rear view of the retainer in the clutch mechanism of the embodiment 1 of the present invention, Fig.7 (c) is a side view of the retainer in the clutch mechanism of the embodiment 1 of the present invention, and Fig.7 (d) is a side view showing L-shaped arms swinging (pivoting).

[Fig.8] Fig.8 is a plan view of a diaphragm spring in the clutch mechanism of the embodiment of the present invention.

[Fig.9] Fig.9 is a sectional view taken along line IX-IX in Fig.8

[Fig.10] Fig.10 is a perspective view showing the diaphragm spring with the retainer mounted thereon, which are (is) used in the clutch mechanism of the embodiment 1 of the present invention.

[Fig.11] Fig.11 is a sectional view taken along line XI-XI in Fig.1(a).

[Fig. 12] Fig. 12(a) is a sectional view of a clutch mechanism of an embodiment 2 of the present invention, and Fig. 12(b) is a plan view of a base plate in the clutch mechanism of the embodiment 2 of the present invention.

[Fig.13] Fig. 13 is a sectional view of a clutch mechanism of an embodiment 3 of the present invention.

[Fig. 14] Fig. 14 is a perspective view of a retainer used in a clutch mechanism of an embodiment 4 of the present invention.

[Fig. 15] Fig. 15 is a plan view of the retainer used in the clutch mechanism of the embodiment 4.

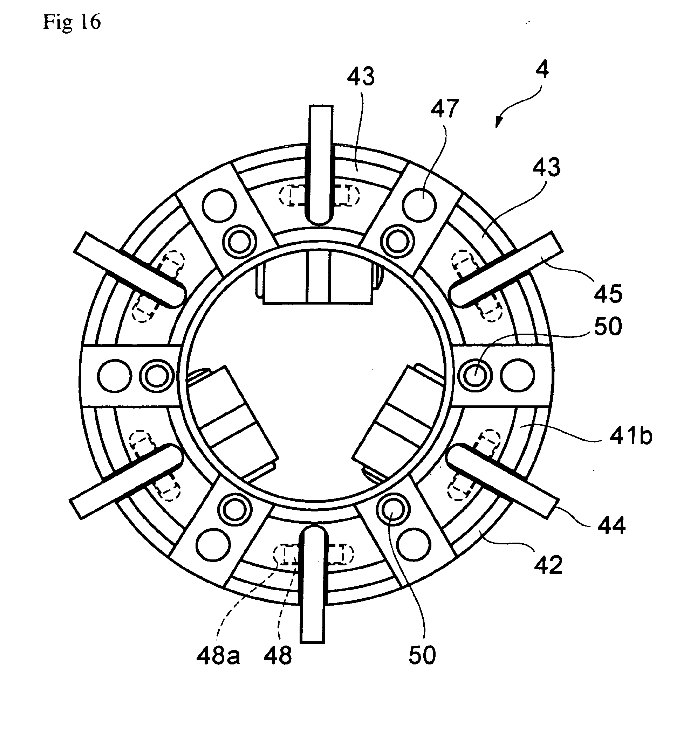

[Fig. 16] Fig. 16 is a rear view of the retainer used in the clutch mechanism of the embodiment 4.

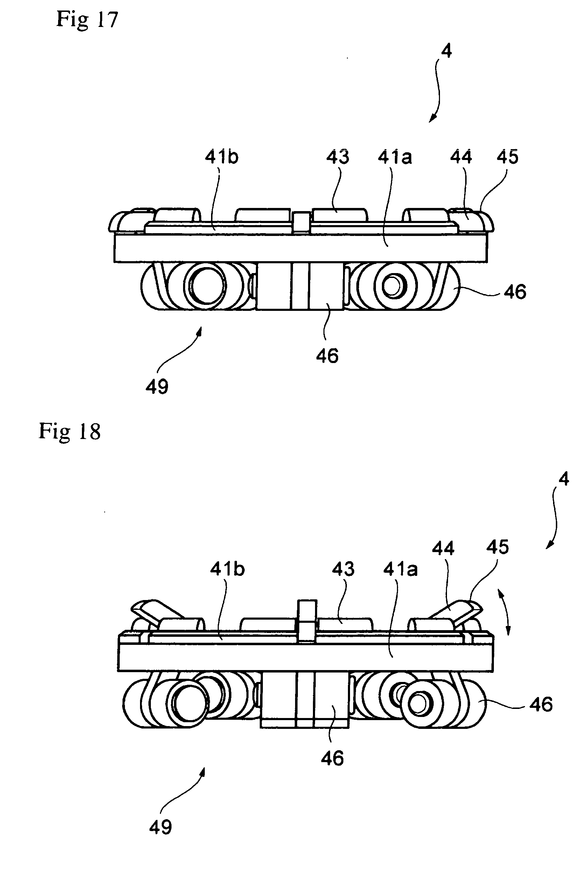

[Fig.17] Fig.17 is a side view of the retainer used in the clutch mechanism of the embodiment 4.

[Fig.18] Fig.18 is a side view showing L-shaped arms swinging (pivoting) in the retainer used in the clutch mechanism of the embodiment 4.

[Fig. 19] Fig. 19 is a perspective view of a retainer used in a clutch mechanism of an embodiment 5 of the present invention.

[Fig.20] Fig.20 is a plan view of the retainer used in the clutch mechanism the embodiment 5.

[Fig.21] Fig.21(a) is a rear view of the retainer used in the clutch mechanism of the embodiment 5, and Fig.21(b) is a sectional view taken along line b-b in Fig.21(a).

[Fig.22] Fig.22 is a side view of the retainer used in the clutch mechanism of the embodiment 5.

[Fig.23] Fig.23 is a side view showing L-shaped arms swinging in the retainer used in the clutch mechanism of the embodiment 5.

[Fig.24] Fig.24 is a graphical representation of relation curves of clutch lever operating force-amount of clutch lever movement which represent characteristics of a diaphragm spring and a coil spring.

[Fig.25] Fig.25 is a graphical representation showing comparison between data on Example in which has the clutch mechanism of the embodiment 2 of the present invention has actually been constructed and data on a conventional clutch mechanism as a Comparative Example.

[Fig.26] Fig.26 is a view showing lever pressing positions in the diaphragm spring.

Note on Reference Numbers

[0130]

| | |
|---|---|
| 100, 200, 300 | clutch mechanism |
| 1 | friction plate |
| 2 | pressure plate |
| 21 | annular rim |
| 22 | (through) hole |
| 23 | opening |
| 25 | (annular) protrusion |
| 3 | diaphragm spring |
| 31 | annular portion |
| 32 | lever |
| 32a | free end |
| 33 | opening |
| 35 | circumferential edge |
| 4 | retainer |
| 41 | annular portion |
| 48 | support |
| 49 | centrifugal mechanism |
| 47 | bolt insertion hole |
| 48 | support |
| 43 | protuberance |

| 44 | L-shaped arm |
| 46 | mass body |
| 45 | operative portion |
| 5 | inner hub |
| 6 | adjuster screw |
| 8 | coil spring |
| 10 | clutch plate |

**Claims**

1. A clutch mechanism comprising:

   rotational driving force outputting members connected to a rotational driving force input system;
   rotational driving force receiving members connected to a rotational driving force output system;
   a pressing mechanism for pressing said rotational driving force outputting members against said rotational driving force receiving members to keep said rotational driving force outputting members and said rotational driving force receiving members in contact with each other; and
   a disengaging means for releasing said rotational driving force outputting members and said rotational driving force receiving members from the pressing force which keeps them in contact with each other;
   said pressing mechanism having a constant load applying means and a variable load applying means for together generating the pressing force which brings and keeps said rotational driving force outputting members and said rotational driving force receiving members in contact with each other, a value of the pressing load generated by said constant load applying means and said variable load applying means being kept in excess of a non-slide limit which is required for keeping said rotational driving force outputting members and said rotational driving force receiving members in contact with each other to transfer the rotational driving force, a value of a load generated by said constant load applying means being set to be less than the maximum non-slide limit, i.e., the maximum of the non-slide limit which is required for keeping said rotational driving force outputting members and said rotational driving force receiving members in contact with each other to transfer the rotational driving force.

2. A clutch mechanism comprising:

   rotational driving force outputting members connected to a rotational driving force input system;
   rotational driving force receiving members connected to a rotational driving force output system;
   a pressing mechanism for pressing said rotational driving force outputting members against said rotational driving force receiving members to keep said rotational driving force outputting members and said rotational driving force receiving members in contact with each other; and
   a disengaging means for releasing said rotational driving force outputting members and said rotational driving force receiving members from the pressing force which keeps them in contact with each other;
   said pressing mechanism having an elastic load applying means and a centrifugal load applying means for together generating the pressing force which brings and keeps said rotational driving force outputting members and said rotational driving force receiving members in contact with each other, a value of the pressing load generated by said elastic load applying means and said centrifugal load applying means being kept in excess of a non-slide limit which is required for keeping said rotational driving force outputting members and said rotational driving force receiving members in contact with each other to transfer the rotational driving force, a value of a load generated by said elastic load applying means being set to be less than the maximum non-slide limit, i.e., the maximum of the non-slide limit which is required for keeping said rotational driving force outputting members and said rotational driving force inputting receiving members in contact with each other to transfer the rotational driving force.

3. The clutch mechanism according to claim 1 or 2, wherein said maximum non-slide limit is a pressing force capable of preventing slide from occurring between said rotational driving force outputting members and said rotational driving force receiving members, and is set to be a lower limit of the pressing force exerted between said rotational driving force outputting members and said rotational driving force receiving members at the maximum of the rotational driving force transferred from said rotational driving force input system to said rotational driving force output system.

4. The clutch mechanism according to claim 2, wherein said pressing mechanism has a first pressing member which is disposed facing said rotational driving force outputting members to be capable of being (brought and kept in contact therewith and a second pressing member connected to said rotational driving force receiving members, and said elastic load applying means is disposed and compressed between said first pressing member and said second pressing member.

5. The clutch mechanism according to claim 4, wherein said centrifugal load applying means comprises a plurality of supports annually disposed on said second pressing member and centrifugal mechanisms respectively supported by said supports, and
said centrifugal mechanisms have swing members so supported respectively by said supports as to be swingable thereon, and each of said swing members has an operative portion formed at its one end facing said first pressing member and a mass body provided on the other end.

6. The clutch mechanism according to claim 5, wherein said first pressing member and said second pressing member are coaxially disposed, and said elastic load applying means is a diaphragm spring, and the diaphragm spring has an annular portion and a plurality of levers which inward extend from said annular portion and of which tips are free ends, and said annular portion has its circumferential edge supported by a protrusion (an annular rim) formed on a circumferential edge of said first pressing member, and said plurality of levers are supported by said second pressing member, and
an operative portion of a swing member of each of said centrifugal mechanisms so extends through a slot between adjacent levers as to be permitted to bias said first pressing member.
\* This sentence may be better to be written in English as:

(1) each of the operative portions of the swing members of said centrifugal mechanisms is permitted to bias said first pressing member with each of the swing members extending through a slit between adjacent levers, or
(2) each of the swing members of said centrifugal mechanisms is permitted to extend through a slit between adjacent levers to bias said first pressing member at its operative portion.

7. The clutch mechanism according to claim 6, wherein a centrifugal load transfer member is disposed between said first pressing member and said diaphragm spring, and an operative portion of each of said centrifugal mechanisms of said second pressing member is permitted to bias said first pressing member via said centrifugal load transfer member.

8. The clutch mechanism according to claim 7, wherein said centrifugal load transfer member has an annular portion and a plurality of plate portions outward extending from the circumferential edge of said annular portion, and
said plate portions are located at positions corresponding to said slits of said diaphragm spring, respectively,

9. The clutch mechanism according to any one of claims 6 to 8, wherein on a side of said second pressing member which faces said diaphragm spring, protuberances are formed in a ring, and
said protuberances are pressed against (abut on) said levers in the vicinity of said free ends, and said diaphragm spring is thereby compressedly disposed.

10. The clutch mechanism according to claim 9, wherein an inner diameter of the ring in which said protuberances are formed is so determined that the value of the load generated by said elastic load applying means is smaller than the maximum non-slip limit.

11. A clutch mechanism which transfers power a driving force from an engine to clutch plates by pressing friction plates to keep the friction plates and the clutch plates in press contact with each other and which discontinues the transfer of power the driving force from the engine by releasing the friction plates form the pressing, said clutch mechanism comprising:

a pressure plate which presses said friction plates;
a diaphragm spring which provides said pressure plate with the pressing force; and
a retainer which applies a predetermined load to said diaphragm spring;
said diaphragm spring being elastically supported between said pressure plate and said retainer and being elastically deformed by movement of said pressure plate,
said retainer having an annular portion, protuberances formed in a ring on one surface of said annular portion, and a plurality of L-shaped arms which are swingably attached to supports provided on said annular portion and which extend through said annular portion,

tightness of (the) press contact between said friction plates and said clutch plates being determined (established) by a diaphragm load resulting from superposition of the pressing force with which said protuberances press said diaphragm spring and the pressing force with which said diaphragm spring press said pressure plate, and a centrifugal load with which said L-shaped arms press said pressure plate and which increases as an engine speed increases.

12. The clutch mechanism according to claim 11, wherein said diaphragm spring has an annular portion, a plurality of levers taperingly extending from an inner circumference of said annular portion toward the center of the annular portion, and a plurality of slits radially extending from an opening centrally formed,
each of said L-shaped arms on said supports has an operative portion formed at its one end and a mass body provided on the other end,
said diaphragm load is generated in such a manner that said protuberances press the levers of said diaphragm spring and the levers in turn press the pressure plate, and
said centrifugal load is generated in such a manner that said operative portions of said L-shaped arms are urged to pass through said slits to press said pressure plate by centrifugal forces exerted on said mass bodies as an engine speed increases.

13. The clutch mechanism according to claim 12, said clutch mechanism further comprising a base plate having a ring portion and plate portions outward extending from a circumference of the ring portion, wherein said base plate is so disposed that said plate portions are located corresponding to the slits of said diaphragm spring, and
said centrifugal load is generated in such a manner that said operative portions of said L-shaped arms press said pressure plate via said plate portions.

14. The clutch mechanism according to any one of claims 11 to 13, wherein said diaphragm load is less than a maximum non-slide limit between the friction plates and the clutch plates which is calculated from a maximum torque.

15. The clutch mechanism according to any one of claims 11 to 13, wherein an inner diameter of a ring in which said protuberances are formed, i.e., a retainer diameter is so determined that said diaphragm load is less than a maximum non-slide limit between the friction plates and the clutch plates which is calculated from a maximum torque.

16. The clutch mechanism according to any one of claims 11 to 13, wherein a total of said diaphragm load and said centrifugal load is so variable depending on an engine speed as to be in excess of a non-slide limit at an engine speed at which a maximum torque is generated.

17. The clutch mechanism according to any one of claims 11 to 16, wherein the annular portion of the retainer comprises an annular portion main body made of a (highly) rigid lightweight material and a (highly) rigid higher specific gravity portion made of a (highly) rigid material having a specific gravity higher than that of the (highly) rigid lightweight material which are joined together, and protuberances are formed in the (highly) rigid higher specific gravity portion.

18. The clutch mechanism according to any one of claims 11 to 16, wherein the annular portion of the retainer has its annular portion main body made of a (highly) rigid lightweight material implanted with rivets made of a (highly) rigid material having a specific gravity higher than that of the (highly) rigid lightweight material, and the retainer is disposed in such a manner that end faces of the rivets abut on the levers of the diaphragm spring.

19. A retainer used in the clutch mechanism according to any one of claims 11 to 16, an annular portion of said retainer comprising an annular portion main body made of a (highly) rigid lightweight material and a (highly) rigid higher specific gravity portion made of a (highly) rigid material having a specific gravity higher than that of the (highly) rigid lightweight material which are joined together, protuberances being formed in the (highly) rigid higher specific gravity portion.

20. A retainer used in the clutch mechanism according to any one of claims 11 to 16, said retainer comprising an annular portion having its annular portion main body made of a (highly) rigid lightweight material implanted with rivets made of a (highly) rigid material having a specific gravity higher than that of the (highly) rigid lightweight material, said retainer being disposed in such a manner that end faces of the rivets abut on the levers of the diaphragm spring.

Fig 1

(a)

(b)

Fig 2

Fig 3

Fig 4

EP 1 772 642 A1

Fig 5

10a

10

26

Fig 6

(a)

(b)

Fig 7

(a)

(b)

(c)

(d)

Fig 8

Fig 9

Fig 10

Fig 11

Fig 12

(a)

(b)

Fig 13

Fig 14

Fig 15

Fig 16

Fig 17

Fig 18

Fig 19

Fig 20

Fig 21

(a)

4

47

45

42

50b

48

44

42

50a

48

b

b

(b)

42

48

50a

Fig 22

Fig 23

## Fig 24

amount of movement of clutch lever

## Fig 25

engine speed (rpm) × 1000

Fig 26

## INTERNATIONAL SEARCH REPORT

| | International application No. |
|---|---|
| | PCT/JP2005/009695 |

A. CLASSIFICATION OF SUBJECT MATTER
   Int.Cl⁷ F16D13/52, 13/70

According to International Patent Classification (IPC) or to both national classification and IPC

B. FIELDS SEARCHED

Minimum documentation searched (classification system followed by classification symbols)
   Int.Cl⁷ F16D13/52, 13/70

Documentation searched other than minimum documentation to the extent that such documents are included in the fields searched
   Jitsuyo Shinan Koho          1922-1996   Jitsuyo Shinan Toroku Koho   1996-2005
   Kokai Jitsuyo Shinan Koho    1971-2005   Toroku Jitsuyo Shinan Koho   1994-2005

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | Microfilm of the specification and drawings annexed to the request of Japanese Utility Model Application No. 148690/1981(Laid-open No. 52341/1983) (Naomitsu SUNAWACHI), 09 April, 1983 (09.04.83), Full text; all drawings (Family: none) | 1-5 |
| X | US 5575367 A  (MR. GASKET, INC.), 19 November, 1996 (19.11.96), Full text; all drawings (Family: none) | 1-4 |

☒ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29 June, 2005 (29.06.05) | 12 July, 2005 (12.07.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

International application No.

PCT/JP2005/009695

C (Continuation).    DOCUMENTS CONSIDERED TO BE RELEVANT

| Category* | Citation of document, with indication, where appropriate, of the relevant passages | Relevant to claim No. |
|---|---|---|
| X | JP 59-131033 A  (HKS Corp.),<br>27 July, 1984 (27.07.84),<br>Full text; all drawings<br>(Family: none) | 1-4 |
| A | JP 4-30428 Y2  (Toyota Motor Corp.),<br>22 July, 1992 (22.07.92),<br>Full text; all drawings<br>(Family: none) | 1-20 |
| A | JP 55-44166 A  (Suzuki Motor Co., Ltd.),<br>28 March, 1980 (28.03.08),<br>Full text; all drawings<br>(Family: none) | 1-20 |
| A | JP 2-32894 Y2  (Suzuki Motor Co., Ltd.),<br>05 September, 1990 (05.09.90),<br>Full text; all drawings<br>(Family: none) | 1-20 |

Form PCT/ISA/210 (continuation of second sheet) (January 2004)

## REFERENCES CITED IN THE DESCRIPTION

**Patent documents cited in the description**

- JP 58052341 U
- US 5575367 A
- JP 59131033 A
- JP 4030428 U
- JP 55044166 A
- JP 2032894 U
- JP 8061389 A